# EUROPÄISCHE PATENTSCHRIFT

(11) **EP 3 676 075 B1**
(45) Veröffentlichungstag und Bekanntmachung des Hinweises auf die Patenterteilung: **20.09.2023**
(21) Anmeldenummer: 18759622.6
(22) Anmeldetag: 24.08.2018
(51) Int. Cl.: B29C 53/08, B29C 53/84, B29K 105/10, B29L 31/00, B29L 31/10

(54) **BIEGEVERFAHREN UND BIEGEVORRICHTUNG ZUM BIEGEN EINES VERBUNDWERKSTOFFSTABES**
BENDING METHOD AND BENDING DEVICE FOR BENDING A COMPOSITE ROD
PROCÉDÉ DE PLIAGE ET DISPOSITIF DE PLIAGE POUR PLIER UNE TIGE COMPOSITE

(30) Priorität: 01.09.2017 DE 102017120143
(43) Veröffentlichungstag der Anmeldung: 08.07.2020
(73) Patentinhaber: Solidian GmbH, 72458 Albstadt (DE)
(72) Erfinder: BISCHOFF, Thomas, 72406 Bisingen (DE)
(74) Vertreter: Rüger Abel Patentanwälte PartGmbB
(86) Internationale Anmeldenummer: PCT/EP2018/072907
(87) Internationale Veröffentlichungsnummer: WO 2019/042895

(56) Entgegenhaltungen:
- WO-A1-2016/166399
- DE-A1-102012 005 973
- US-A- 5 422 048
- US-A1- 2017 066 209

## Beschreibung

Die Erfindung betrifft ein Biegeverfahren sowie eine Biegevorrichtung zum Biegen wenigstens eines Verbundwerkstoffstabes an einer Biegestelle. Es können mehrere Verbundwerkstoffstäbe gleichzeitig gebogen werden, die beispielsweise Bestandteil eines Gitterkörpers sind. Ein solcher Gitterkörper weist Maschen auf, die von mehreren Verbundwerkstoffstäben begrenzt werden. Die Kunststoffmatrix des Gitterkörpers bzw. der Verbundwerkstoffstäbe kann integral ausgebildet sein, so dass ein einheitlicher Gitterkörper gebildet ist. Alternativ können auch Stäbe in mehreren Lagen an Kreuzungsstellen miteinander verbunden sein und den Gitterkörper bilden.

Solche Verbundwerkstoffstäbe lassen sich in vielen technischen Gebieten beim Bau von Gegenständen verwenden, bei denen Verbundwerkstoffe verwendet werden, wie z.B. im Fahrzeugbau (Fahrräder, Boote, Flugzeuge, Autos, usw.).

Stäbe werden als Bewehrungsstäbe auch im Bausektor eingesetzt, um Baustoffkörper, wie Betonbauteile oder Zementbauteile, zu verstärken. Häufig kommen Bewehrungsstäbe aus Stahl zum Einsatz, die sich mit herkömmlichen Biegeverfahren und Biegevorrichtungen sehr einfach an die geometrischen Erfordernisse des herzustellenden Baustoffkörpers anpassen lassen.

Andererseits sind auch Bewehrungsstäbe aus einem Verbundwerkstoff bekannt, bei dem ein Verstärkungsfaserbündel (sogenanntes Roving) in einer Kunststoffmatrix eingebettet ist. Bei solchen Bewehrungsstäben wurden bislang unterschiedliche Ansätze verfolgt, um den Verlauf des Verbundwerkstoffstabes an die erforderliche Geometrie anzupassen. Zum Beispiel kann die Kunststoffmatrix bei der Herstellung des Verbundwerkstoffstabes nicht vollständig ausgehärtet werden, um sie vor dem vollständigen Aushärten in die gewünschte Form zu bringen. Dies erfordert allerdings eine aufwendige Lagerung des noch nicht ausgehärteten Verbundwerkstoffstabes, die in der Regel eine Kühlung erforderlich macht, um das vollständige Aushärten zu verhindern. Dieser Ansatz wird bei einer duromeren Kunststoffmatrix verwendet. Bei einer thermoplastischen Kunststoffmatrix kann auch nach dem Aushärten ein Umformen erfolgen. Dazu wird die thermoplastische Kunststoffmatrix erwärmt bis die Umformbarkeit gegeben ist, um den Verbundwerkstoffstab anschließend umzuformen und wieder auszuhärten.

Ein faserverstärkter Verbundwerkstoffstab ist aus US 2008/0141614 A1 bekannt. Die Kunststoffmatrix ist thermoplastisch und kann daher zum Biegen oder Umformen des Verbundwerkstoffstabes erwärmt und anschließend durch Kühlen wieder ausgehärtet werden.

US 5,456,591 A beschreibt ein Verfahren zur Herstellung eines Tennisschlägers, bei dem ein Verbundwerkstoff aufgewärmt und um eine Form gelegt wird. Anschließend wird der Verbundwerkstoff abgekühlt, wodurch der Tennisschlägerrahmen seine gewünschte Form erhält. Ein ähnliches Verfahren ist auch aus WO 2007/118643 A1 bekannt.

Bei dem aus WO 2013/006964 A1 bekannten Verfahren wird das Verbundmaterial zunächst in die gewünschte Form gebogen und anschließend über einen Binder ausgehärtet.

Zur Erwärmung der thermoplastischen Kunststoffmatrix sind unterschiedliche Verfahren im Einsatz. Zum Beispiel wird in einem Umluftofen oder durch Kontakterwärmung über beheizte Werkzeuge eine Erwärmung durchgeführt. Dies verlangt allerdings, dass die Wärmeleitung innerhalb des Bauteils ausreichend groß ist. Das Verfahren ist zeit- und energieaufwendig.

Die Kunststoffmatrix kann außerdem durch Wärmestrahlung (Infrarotstrahlung) oder durch Elektronenstrahlung erfolgen. Zum Beispiel beschreibt DE 102 222 56 B4 das Erwärmen eines Kunststoffrohrs durch Infrarotstrahlung vor dem Biegen. Dabei sind allerdings die Eindringtiefen klein und abhängig vom Durchmesser des Verbundwerkstoffstabes ist eine solche Erwärmung ungeeignet bzw. sehr zeitaufwendig. Die Elektronenstrahlung birgt außerdem die Gefahr, dass die Elektronen das Polymer der thermoplastischen Kunststoffmatrix beschädigen. Außerdem muss die Arbeitsumgebung aus Gründen der Arbeitssicherheit aufwendig geschützt werden.

Es ist ferner bekannt, eine thermoplastische Kunststoffmatrix mit einer Hochfrequenzanregung über Elektroden aufzuwärmen. Ein Verfahren zur Erwärmung dielektrischer Hohlkörper durch Hochfrequenz ist aus DE 10 2014 116 819 A1 bekannt. Bei einer besonderen Ausgestaltung dieses Verfahrens bzw. dieser Vorrichtung kann im Inneren eines Hohlkörpers ein Plasma gezündet und als Plasmaelektrode verwendet werden (DE 10 2014 116 818 A1). Hierzu müssen in dem zu erwärmenden Material anregbare Gruppen enthalten sein, was die Materialauswahl erheblich einschränkt. Außerdem muss die Form der Elektroden an die Geometrie des zu erwärmenden Bauteils angepasst werden, was wiederum einen zusätzlichen Aufwand bedeutet, wenn unterschiedlich geformte Bewehrungsbauteile erwärmt und umgeformt werden sollen.

Schließlich hat auch der Einsatz von Mikrowellentechnik zur Erwärmung keine Verbreitung gefunden, denn die Mikrowellentechnik schränkt die einsetzbaren Materialien ein. Bei glasfaserverstärkten Bewehrungsbauteilen erfolgt durch Mikrowellen nur eine geringfügige Erwärmung. Außerdem muss eine homogene Mikrowellenabstrahlung erreicht werden, was in der Regel nur in geschlossenen Öfen erreicht werden kann.

US 5,422,048 A betrifft ein Verfahren zur Herstellung eines gebogenen Rohres aus Harz. Durch Einbringen von Ultraschallwellen an der Biegestelle wird das Harz erweicht, so dass das Rohr anschließend gebogen werden kann.

EP 2 399 717 A2 beschreibt eine Vorrichtung und ein Verfahren zum kapazitiven Erwärmen eines Rohres oder eines Rohrendabschnitts und zum anschließenden Biegen bzw. Umformen des Rohres durch Anlegen einer Hochfrequenzspannung zwischen zwei Elektroden.

US 3,890,108 A beschreibt die Ausgestaltung eines Eckbereichs eines Sandwich-Bauteils. An der Biegungsinnenseite des Sandwiches ist eine Vertiefung ausgebildet.

EP 309 55 89 A1 betrifft ein Verfahren zum Verbinden zweier Teile durch Ultraschallschweißen.

US 6,519,500 B1 beschreibt ein additives Herstellungsverfahren, bei dem Schichten aufeinander gelegt, mit Druck aufeinander gepresst und durch Einbringen von Ultraschallschwingungen miteinander verbunden werden. Ein solches Verfahren ist auch in dem Artikel *"*Ultrasonic consolidation of thermoplastic composite prepreg for automated fiber placement" Robert H. Rizzolo und Daniel F. Walczyk, Journal of Thermalplastic Composite Materials 1-18, 2015, DOI: 10.1177/0892705714565705 bekannt.

Es kann daher als Aufgabe der vorliegenden Erfindung angesehen werden, ein Biegeverfahren bzw. eine Biegevorrichtung zu schaffen, bei dem das Biegen eines Verbundwerkstoffstabes schnell, einfach und energieeffizient unabhängig von der konkreten Geometrie des Verbundwerkstoffstabes durchgeführt werden kann. Das Biegen des Verbundwerkstoffstabes soll insbesondere sowohl bei einem Bewehrungshersteller im Werk als auch vor Ort auf einer Baustelle schnell und kostengünstig durchführbar sein.

Die Aufgabe wird durch ein Biegeverfahren mit den Merkmalen des Patentanspruches 1 sowie eine Biegevorrichtung mit den Merkmalen des Patentanspruches 19 gelöst.

Das erfindungsgemäße Biegeverfahren sowie die erfindungsgemäße Biegevorrichtung sind dazu eingerichtet, wenigstens einen Verbundwerkstoffstab an einer Biegestelle zu biegen. Der Verbundwerkstoffstab weist ein in eine Kunststoffmatrix eingebettetes Verstärkungsfaserbündel auf. Die Verstärkungsfäden bzw. Filamente des Verstärkungsfaserbündels können Kunstfasern und/oder Naturfasern sein. Es können Filamente wie Glasfasern unterschiedlichen Typs (z.B. AR-Glasfasern), Karbonfasern, Basaltfasern oder eine Kombination davon verwendet werden. Die Kunststoffmatrix kann einen thermoplastischen Kunststoff und/oder einen reversibel quervernetzten Kunststoff aufweisen.

An der Biegestelle, an der der wenigstens eine Verbundwerkstoffstab gebogen werden soll, wird mittels einer Sonotrode einer Ultraschalleinrichtung Energie in den Verbundwerkstoffstab eingebracht, um die Kunststoffmatrix an der Biegestelle zu erwärmen und den Verbundwerkstoffstab umformbar bzw. biegbar zu machen. Im Ausgangszustand erstrecken sich die beiden, an die Biegestelle angrenzenden Stababschnitte des Verbundwerkstoffstabes vorzugsweise in einer ersten Raumrichtung bezogen auf ein Koordinatensystem, das während des Biegens ortsfest ist zur Sonotrode. Zunächst wird die Sonotrode an der Biegestelle in Kontakt mit dem Verbundwerkstoffstab gebracht und die Kunststoffmatrix wird erwärmt, indem Ultraschallwellen in den Verbundwerkstoffstab eingekoppelt werden. Nach dem Erwärmen findet eine Zustellbewegung zwischen der Sonotrode und dem Verbundwerkstoffstab in eine zweite Raumrichtung statt, die radial zur herzustellenden Biegung an der Biegestelle ausgerichtet ist. Zur Durchführung der Zustellbewegung kann beispielsweise nur die Sonotrode bewegt werden. Vorzugsweise findet die Zustellbewegung ausschließlich durch eine lineare Bewegung in der zweiten Raumrichtung statt. Die Zustellbewegung kann alternativ durch das Bewegen des Verbundwerkstoffstabes oder durch das Bewegen sowohl der Sonotrode, als auch des Verbundwerkstoffstabes erfolgen.

Durch die Zustellbewegung verformt die Sonotrode den Verbundwerkstoffstab an der Biegestelle und bildet einen Umformabschnitt am Verbundwerkstoffstab aus. Insbesondere wird dadurch eine Kehle oder rinnenförmige Vertiefung im Umformabschnitt des Verbundwerkstoffstab gebildet.

Der Verbundwerkstoffstab wird um wenigstens eine Achse an der Biegestelle gebogen, wobei sich die wenigstens eine Achse parallel zu einer dritten Raumrichtung erstreckt, die rechtwinklig zur zweiten Raumrichtung ausgerichtet ist. Nach dem Biegen wird die Kunststoffmatrix an der Biegestelle ausgehärtet.

Durch die Ultraschalleinrichtung mit der Sonotrode wird die Energie zur Erwärmung des Verbundwerkstoffstabes gezielt lokal an der Biegestelle in den Verbundwerkstoffstab eingebracht. Ein Erwärmen des gesamten Verbundwerkstoffstabes ist vermieden. Die Ultraschallerwärmung ist bei beliebigen Werkstoffen der Kunststoffmatrix bzw. des Verstärkungsfaserbündels anwendbar. Durch die Sonotrode kann innerhalb einer ausreichend kurzen Zeit genügend Wärme an der Biegestelle erzeugt werden, um den Verbundwerkstoffstab biegen zu können. Das Verfahren ist im Hinblick auf den Arbeitsschutz unkritisch. Außerdem ist es mit relativ einfachen Mitteln ausführbar. Es kann sowohl in einer Fertigungshalle, als auch auf einer Baustelle vor Ort angewandt werden.

Es ist bevorzugt, wenn die Ausrichtung der an die Biegestelle angrenzenden Stababschnitte des Verbundwerkstoffstabes während des Umformens zur Ausbildung des Umformabschnittes unverändert bleibt. Insbesondere erstrecken sich die an die Biegestelle angrenzenden Stababschnitte des Verbundwerkstoffstabes vor dem Biegen entlang einer gemeinsamen Geraden und dieser Ausrichtung bleibt bis zum Biegen des Verbundwerkstoffstabes an der Biegestelle erhalten.

Durch das Erzeugen des Umformabschnitts vor dem Biegen wird der Abschnitt des Verstärkungsfaserbündels entlang der Biegestelle unter Zug gesetzt und in eine gewünschte Lage gebracht. Dadurch kann die Zugfestigkeit des gebogenen Verbundwerkstoffstabes aufrechterhalten werden.

Nach dem Umformen hat der Verbundwerkstoffstab im Umformabschnitt vorzugsweise eine Breite in der dritten Raumrichtung, die größer ist als die Abmessung der an die Biegestelle angrenzenden Stababschnitte in der dritten Raumrichtung. Dabei kann der Umformabschnitt des Verbundwerkstoffstabes eine Dicke in der zweiten Raumrichtung aufweisen, die kleiner ist als die Abmessung der an die Biegestelle angrenzenden Stabschnitte in der zweiten Raumrichtung. Somit kann der Umformabschnitt in der zweiten Raumrichtung flacher und in der dritten Raumrichtung breiter sein als die an dem Umformabschnitt angrenzenden Stababschnitte. Der Umformabschnitt bildet eine Kehle oder Rinne, die sich in die dritte Raumrichtung erstreckt.

Nach dem Biegen hat der Verbundwerkstoffstab an der Biegestelle eine Biegungsinnenseite mit einer Innenkrümmung und einer Biegungsaußenseite mit einer Außenkrümmung. Die Biegungsinnenseite und die Biegungsaußenseite sind radial zur Biegung betrachtet auf entgegengesetzten Seiten des Verbundwerkstoffstabes angeordnet. Die Biegungsinnenseite ist vorzugsweise der Sonotrode zugewandt. Die Innenkrümmung hat in irgendeiner betrachteten Radialebene der Biegung jeweils einen größeren Betrag als die Au-ßenkrümmung in derselben Radialebene. In jeder betrachteten Radialebene haben die Verstärkungsfasern des Verstärkungsfaserbündels eine Krümmung, die bevorzugt kleiner ist oder maximal so groß ist wie die Innenkrümmung in der Radialebene .

Anstelle eines einzelnen Verbundwerkstoffstabes können auch mehrere Verbundwerkstoffstäbe gleichzeitig gebogen werden, die beispielsweise Bestandteil eines Gitterkörpers sind. Der Gitterkörper weist Maschen auf, die von mehreren Verbundwerkstoffstäben des Gitterkörpers gebildet werden. Die Kunststoffmatrix des Gitterkörpers bzw. der Verbundwerkstoffstäbe kann integral ausgebildet sein, so dass ein einheitlicher Gitterkörper vorhanden ist. Alternativ können auch Verbundwerkstoffstäbe in mehreren Lagen an Kreuzungsstellen miteinander verbunden sein und den Gitterkörper bilden. An den Kreuzungsstellen des Gitterkörpers können Verbundwerkstoffstäbe also integral ineinander übergehen oder aneinander anliegend befestigt sein.

Der wenigstens eine Verbundwerkstoffstab bzw. der Gitterkörper kann als Bewehrung für einen Baustoffkörper verwendet werden.

Es ist vorteilhaft, wenn während der Zustellbewegung zur Bildung des Umformabschnitts und/oder während des Biegens zumindest phasenweise bzw. zeitweise Ultraschallwellen von der Sonotrode abgegeben werden. Durch diese Maßnahme kann ein Energieverlust durch Konvektion von der Staboberfläche ausgeglichen werden und der Verbundwerkstoffstab bleibt an der Biegestelle umformbar bzw. biegbar.

Zusätzlich oder alternativ kann während des Biegens zumindest phasenweise Energie durch eine weitere Energiequelle zur Erwärmung des Verbundwerkstoffstabes an der Biegestelle eingetragen werden. Diese weitere Energiequelle kann zusätzlich oder alternativ zur Erzeugung von Ultraschallwellen während des Biegens eingesetzt werden, um den Wärmeverlust durch Konvektion von der Staboberfläche auszugleichen.

Bei einem anderen Ausführungsbeispiel des Verfahrens kann es vorteilhaft sein, während der Zustellbewegung zur Bildung des Umformabschnitts und/oder während des Biegens das Abgeben von Ultraschallwellen zu unterlassen. Das Zustellen und das Biegen des Stabes kann bei diesem Ausführungsbeispiel ausreichend schnell durchgeführt werden, so dass während der Bildung des Umformabschnitts und während des Biegens ein weiteres Abgeben von Ultraschallwellen und/oder eine andere Erwärmung der Biegestelle zur Aufrechterhaltung der Biegbarkeit nicht erforderlich ist. Bei dieser Ausführungsvariante kann die Energieeffizienz weiter verbessert werden.

Wenn während der Bildung des Umformabschnitts bzw. während des Biegens Ultraschallenergie abgegeben wird, kann die abgegebene Ultraschallenergie abhängig von einem Parameter geregelt werden. Dabei können folgende Parameter verwendet werden:
- die während der Zustellbewegung und/oder während des Biegens abgegebene Ultraschallenergie,
- eine Zeitdauer, während der Ultraschallwellen während der Zustellbewegung und/oder während des Biegens abgegeben werden und/oder eine Leistung der abgegebenen Ultraschallwellen während der Zustellbewegung und/oder während des Biegens,
- eine Temperatur des Bewegungsstabes an dem Umformabschnitt oder an der Biegestelle,
- eine Andrückkraft zwischen der Sonotrode und dem Verbundwerkstoffstab,
- eine Position der Zustellbewegung bzw. der Sonotrode, insbesondere das Erreichen einer vorgebbare Endposition,
- eine Biege- oder Winkelposition der Stababschnitte benachbart zur Biegestelle.

Durch die Regelung der abgegebenen Ultraschallenergie wird nur genau so viel Ultraschallenergie erzeugt und abgegeben, wie es für das Umformen bzw. das Biegen des Verbundwerkstoffstabes erforderlich ist. Die Energieeffizienz kann dadurch weiter verbessert werden.

Es ist außerdem vorteilhaft, wenn die Zustellbewegung während der Bildung des Umformabschnitts abhängig von wenigstens einem der nachfolgenden Regelgrößen geregelt wird:
- eine Relativposition zwischen der Sonotrode und dem Verbundwerkstoffstab,
- eine Geschwindigkeit der Zustellbewegung,
- eine Beschleunigung der Zustellbewegung.

Bei einem Ausführungsbeispiel erfolgt das Biegen des Verbundwerkstoffstabes um eine gekrümmte Sonotrodenfläche der Sonotrode. Die Sonotrodenfläche ist um wenigstens eine Achse gekrümmt, die sich parallel zur dritten Raumrichtung erstreckt. Zusätzlich kann die Sonotrodenfläche auch um wenigstens eine weitere Achse gekrümmt sein, die sich in die erste Raumrichtung erstreckt. Die Form der Sonotrodenfläche gibt die Innenkrümmung des Verbundwerkstoffstabes an der Biegestelle vor. Die Sonotrode dient somit gleichzeitig als Werkzeugteil beim Biegen des Verbundwerkstoffstabes.

Bei einem Ausführungsbeispiel des Verfahrens kann die Sonotrode während des Biegens stillstehen. Alternativ hierzu kann die Sonotrode während des Biegens auch bewegt werden, insbesondere in die zweite Raumrichtung und insbesondere in Richtung zur Biegungsaußenseite hin.

Bei einem vorteilhaften Ausführungsbeispiel kann zum Aushärten des Verbundwerkstoffstabes ein Kühlmedium zu der Biegestelle zugeführt werden. Als Kühlmedium kann beispielsweise ein gasförmiges Medium und/oder ein flüssiges Medium verwendet werden. Zum Kühlen kann beispielsweise Luft oder ein anderes Gas zur Biegestelle strömen und/oder es kann ein Sprühnebel aus einer Kühlungsflüssigkeit, insbesondere Wasser, erzeugt und auf die Biegestelle gerichtet werden. Alternativ oder zusätzlich kann auch die Sonotrode und/oder eine Abstützeinrichtung zum Abstützen des Verbundwerkstoffstabes auf der der Sonotrode entgegengesetzten Seite gekühlt werden.

Wenn als Kunststoffmatrix ein reversibel quervernetzbarer Kunststoff verwendet wird, weist dieser vorzugsweise mehrere Komponenten auf, von denen mindestens eine ein Polymer ist. Die Quervernetzung zwischen den Molekül- bzw. Polymerketten ist durch Zufuhr von Energie, insbesondere thermischer Energie, auftrennbar. Unter der Auftrennbarkeit der Quervernetzung ist zu verstehen, dass sie Quervernetzungen der Molekülketten an der Stelle, an denen die Energie zugeführt wird, nicht notwendigerweise vollständig, aber zu einem ausreichenden Anteil durch die Energiezufuhr aufgetrennt werden. Somit sind durch die Energiezufuhr zumindest 25% oder zumindest 50% oder zumindest 70% oder zumindest 90% der hergestellten Quervernetzungen auftrennbar. Die Verarbeitbarkeit in diesem Zustand entspricht in etwa der eines Thermoplasts. Es ist bevorzugt, wenn der reversibel quervernetzbare Kunststoff bei Raumtemperatur quervernetzt ist. Der Kunststoff kann mit oder ohne Zugabe eines Vernetzungsmittels selbstvernetzend sein. Der Kunststoff hat vorzugsweise eine Glasübergangstemperatur von mindestens 50°C oder mindestens 80°C oder mindestens 90°C oder mindestens 100°C. Vorzugsweise beträgt die Glasübergangstemperatur höchstens 130°C oder höchstens 140°C oder höchstens 150°C. Der reversibel quervernetzte Kunststoff kann mittels einer Diels-Alder-Reaktion vernetzbar und mittels einer Retro-Diels-Alder-Reaktion auftrennbar sein.

Der reversibel quervernetzte Kunststoff kann eine erste Komponente mit mindestens zwei dienophilen Doppelbindungen und eine zweite Komponente mit mindestens zwei Dien-Funktionalitäten aufweisen. Die erste Komponente und/oder die zweite Komponente können dabei mehr als zwei Funktionalitäten aufweisen.

Vorzugsweise ist die erste Komponente und/oder die zweite Komponente ein Polymer, beispielsweise ein Polyacrylat, ein Polymethacrylat, ein Polystyrol, ein Mischpolymerisat aus einem oder mehreren der vorgenannten Polymere, ein Polyacrylnitril, ein Polyether, ein Polyester (PE), ein Polyamid, ein Polyesteramid, ein Polyurethan (PU), ein Polycarbonat (PC), ein amorphes und teilkristallines Poly-α-Olefin, ein Ethylen-Propylen-Dien-Kautschuk (EPDM), Ethylen-Propylen-Kautschuk (EPM), ein Polybutadiene, Acrylnitril-Butadien-Styrol (ABS), Styrol-Butadien-Kautschuk (SBR), ein Polysiloxan und/oder ein Block- und/oder Kamm- und/oder Sterncopolymer von einem oder mehreren dieser Polymere.

Die erste Komponente kann eine dienophile Komponente mit zwei dienophilen Doppelbindungen oder ein Isocyanat oder Amin mit wenigstens zwei funktionellen Gruppen pro Molekül sein. Dabei kann es sich um ein Amin, ein Diamin, eine Komponente mit einer Kohlenstoff-Schwefel-Doppelbindung und einer Elektronen aufnehmenden Gruppe, einen trifunktionalen Dithioester-Verbinder, ein difunktionales Polymer aus einer Polymerisation (ATRP), ein Isocyanurat und vorzugsweise ein Isocyanat handeln. Weiter vorzugsweise kann das Isocyanat ein Diisocyanat, wie etwa ein 2,2,4-Trimethyl-1,6-Hexamethylen-Diisocyanat (TMDI) und/oder ein 3-Isocyanotomethyl-3,5,5-Trimethylzyklohexyl-Isocyanat (Isophoron-Diisocyanat, IPDI) sein.

Als zweite Komponenten mit wenigstens zwei Dienfunktionalitätiten können Diene mit Alkohol- oder Aminfunktionalität, wie etwa mehrwertige Alkohole und/oder polyfunktionale Polyamine verwendet werden. Insbesondere kann es sich um Sorbinalkohol und/oder Sorbinsäure handeln. Es ist auch möglich, Polymere, die durch Polymerisation (ATPR) erhalten wurden und mit konjugierten Diengruppen funktionalisiert sind, als zweite Komponente zu verwenden, wie zyklopentadienylterminiertes Poly-(Methyl)-Methakrylat (PMMA-Cp₂).

Beispiele weiterer reversibel quervernetzter Kunststoffe sind in DE 10 2010 001 987 A1 angegeben und können für die Bewehrungsstäbe verwendet werden.

Wie eingangs erläutert, kann die Kunststoffmatrix alternativ oder zusätzlich zu den reversibel quervernetzten Kunststoffen auch einen oder mehrere thermoplastische Kunststoffe aufweisen.

Die Biegevorrichtung weist eine Abstützeinrichtung zum Abstützen des Verbundwerkstoffstabes auf der der Sonotrode entgegengesetzten Seite auf. Vorzugsweise ist wenigstens ein Biegewerkzeug vorhanden, um die Biegebewegung zum Biegen des Verbundwerkstoffstabes an der Biegestelle durchzuführen.

Die Abstützeinrichtung kann wenigstens einen feststehenden Abstützkörper und/oder mehrere relativ zueinander bewegliche bzw. positionierbare Abstützkörper aufweisen. Jeder Abstützkörper kann eine ebene Abstützfläche aufweisen, die der Sonotrode bzw. dem Verbundwerkstoffstab zugeordnet ist und an der der Verbundwerkstoffstab während des Biegens anliegt.

Die Abstützfläche kann bei einem feststehenden Abstützkörper zumindest einen konkav gekrümmten Abstützflächenabschnitt aufweisen.

Die Abstützeinrichtung und insbesondere die Abstützfläche des wenigstens einen Abstützkörpers ist dazu eingerichtet, die Ultraschallwellen zumindest teilweise zu reflektieren. Die durch den Verbundwerkstoffstab hindurchgehenden Ultraschallwellen werden auf der der Sonotrode entgegengesetzten Seite zumindest teilweise und vorzugsweise möglichst vollständig in den Verbundwerkstoffstab zurück reflektiert. Dadurch können sich auch stehende Wellen bilden. Die Reflexion führt zu einem schnellen Herstellen der Biegbarkeit an der Biegestelle. Die Abstützfläche bzw. der wenigstens eine Abstützkörper besteht beispielsweise aus einem Material mit hoher Echogenität, beispielsweise aus Metall.

Es ist bevorzugt, wenn die Abstützfläche des wenigstens einen Abstützkörpers derart ausgebildet ist, dass der Verbundwerkstoffstab vorzugsweise nach dem Ausbilden des Umformabschnitts an der Biegestelle beim Biegevorgang im Wesentlichen vollständig an der Abstützfläche anliegt. In diesem Fall weist die wenigstens eine Abstützfläche eine Krümmung auf, die der Krümmung des wenigstens einen Verbundwerkstoffstabes nach dem Ausbilden des Umformabschnitts entspricht.

Vorteilhafte Ausgestaltungen der Erfindung ergeben sich aus den abhängigen Patentansprüchen, der Beschreibung und den Zeichnungen. Nachfolgend werden bevorzugte Ausführungsbeispiele der Erfindung anhand der beigefügten Zeichnungen im Einzelnen erläutert. Es zeigen:
Figur 1 eine Prinzipdarstellung eines Ausführungsbeispiels einer Vorrichtung und eines Verfahrens zur Herstellung eines Verbundwerkstoffstabes,
Figur 2 einen Verbundwerkstoffstab in schematischer, geschnittener perspektivischer Darstellung,
Figuren 3-5 jeweils eine schematische, blockschaltbildähnliche Ausführungsform eines Biegeverfahrens und einer Biegevorrichtung in unterschiedlichen Phasen beim Biegen eines Verbundwerkstoffstabes,
Figuren 6-8 eine schematische, blockschaltbildähnliche Darstellung eines weiteren Ausführungsbeispiels eines Biegeverfahrens bzw. einer Biegevorrichtung in unterschiedlichen Phasen beim Biegen eines Verbundwerkstoffstabes,
Figur 9 eine abgewandelte Ausführungsform der Biegevorrichtung aus den Figuren 6-8 in schematischer, blockschaltbildähnlicher Darstellung,
Figuren 10-12 eine schematische, blockschaltbildähnliche Darstellung eines weiteren Ausführungsbeispiels eines Biegeverfahrens bzw. einer Biegevorrichtung in unterschiedlichen Situationen beim Biegen eines Verbundwerkstoffstabes,
Figuren 13-15 eine Darstellung eines Ausführungsbeispiels einer Ultraschalleinrichtung mit einer Sonotrode in unterschiedlichen Ansichten,
Figur 16 eine schematische Prinzipdarstellung des Umformens eines Verbundwerkstoffstabes zur Ausbildung eines Umformabschnitts,
Figur 17 den Verbundwerkstoffstab aus Figur 16 in einer schematischen Prinzipdarstellung, nachdem er an einer Biegestelle gebogen wurde,
Figur 18 einen Querschnitt durch den Umformabschnitt des Verbundwerkstoffstabes aus Figur 16 gemäß der Schnittlinie A-A in Figur 16,
Figur 19 einen Querschnitt durch die Biegestelle des Verbundwerkstoffstabes aus Figur 17 gemäß der Schnittlinie
   B-B in Figur 17,
Figur 20 eine schematische Prinzipdarstellung eines Baustoffkörpers in perspektivischer teilgeschnittener Darstellung und
Figuren 21-23 jeweils eine schematische Darstellung auf verschiedene beispielhafte Formen von Baustoffkörpern in Draufsicht.

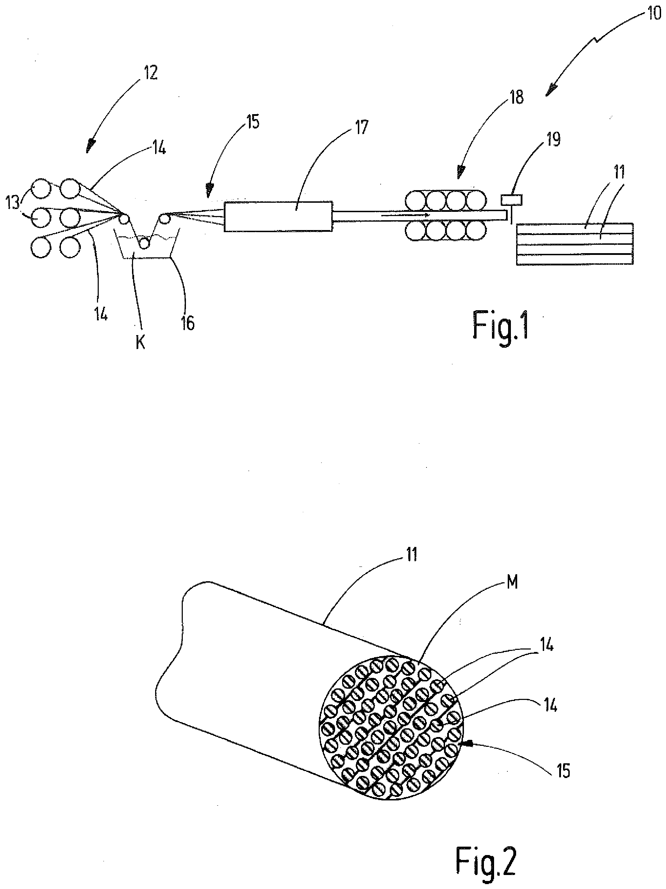

Figur 1 zeigt den prinzipiellen Aufbau einer Pultrusionseinrichtung 10 zur Herstellung eines Verbundwerkstoffstabes 11. Die Pultrusionseinrichtung 10 weist ein Gatter 12 mit mehreren Spulen 13 auf. Auf jeder der Spulen 13 ist ein Verstärkungsfaden bzw. eine Verstärkungsfaser 14 aufgewickelt. Die Anzahl der Verstärkungsfasern 14 und mithin die Anzahl der Spulen 13 kann variieren. Die Verstärkungsfasern 14 bilden gemeinsam ein Verstärkungsfaserbündel 15. Die Verstärkungsfasern 14 werden von den Spulen 13 abgewickelt und in einem Bad 16 aus wenigstens einem flüssigen Kunststoff K getränkt. Der wenigstens eine Kunststoff K haftet an der Außenfläche der Verstärkungsfasern 14 an und/oder durchtränkt die Verstärkungsfasern 14.

Im Anschluss daran werden die Verstärkungsfasern 14 unter Bildung des Verstärkungsfaserbündels 15 in eine Form 17 geführt und dort in der gewünschten Querschnittskontur ausgehärtet, insbesondere vollständig ausgehärtet. Beim vollständigen Aushärten bleibt eine Zugspannung, die auf das Verstärkungsfaserbündel 15 aufgebracht wird, auch im ausgehärteten Zustand erhalten. Mittels einer Abzugseinrichtung 18, die angetriebene Rollen oder Walzen aufweisen kann, wird das ausgehärtete Stangenmaterial aus der Form 17 gefördert und mit einem Trennwerkzeug 19 in gewünschte Längen durchtrennt. Das abgelenkte Stangenmaterial bildet die Bewehrungsstäbe 11.

Beim Ausführungsbeispiel haben die Bewehrungsstäbe 11 einen kreisrunden Querschnitt (Figur 2). Es versteht sich, dass auch davon abweichende, beliebige andere Querschnittskonturen in der Form 17 herstellbar sind.

Der wenigstens eine Kunststoff K bildet eine Kunststoffmatrix M, in der die Verstärkungsfasern 14 bzw. das Verstärkungsfaserbündel 15 eingebettet ist (Figur 2). Der wenigstens eine Kunststoff K kann ein thermoplastischer Kunststoff sein und/oder ein reversibel quervernetzter Kunststoff.

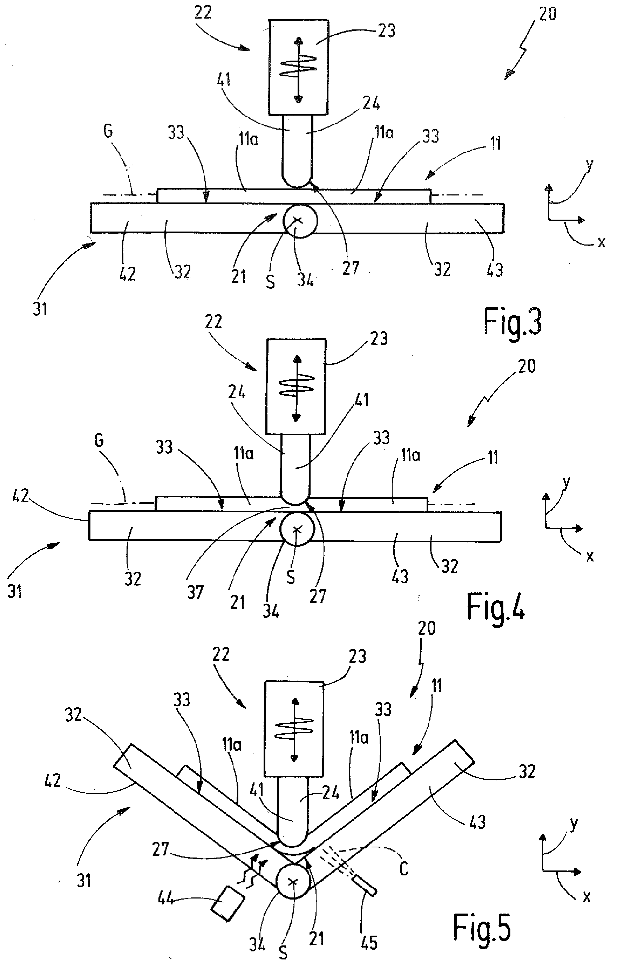

In den Figuren 3-5 ist ein erstes Ausführungsbeispiel einer Biegevorrichtung 20 veranschaulicht. Die Biegevorrichtung 20 ist dazu eingerichtet, den Verbundwerkstoffstab 11 an einer Biegestelle 21 zu biegen. Vor dem Biegen erstrecken sich zumindest die beiden Stababschnitte 11a, die auf entgegengesetzten Seiten der Biegestelle 21 angeordnet sind, entlang einer gemeinsamen Geraden G. Beim hier veranschaulichten Ausführungsbeispiel hat der Verbundwerkstoffstab 11 noch keine weitere Biegestelle, so dass er sich insgesamt entlang der gemeinsamen Geraden G erstreckt. Die Gerade G ist parallel zu einer ersten Raumrichtung x ausgerichtet.

Die Biegevorrichtung 20 weist eine Ultraschalleinrichtung 22 mit einer Ultraschallquelle 23 sowie einer Sonotrode 24 auf. Die Ultraschallquelle 23 erzeugt Ultraschallwellen, die mittels der Sonotrode 24 an der Biegestelle 21 in den Verbundwerkstoffstab 11 eingekoppelt werden können und den Verbundwerkstoffstab 11 an der Biegestelle 21 lokal erwärmen.

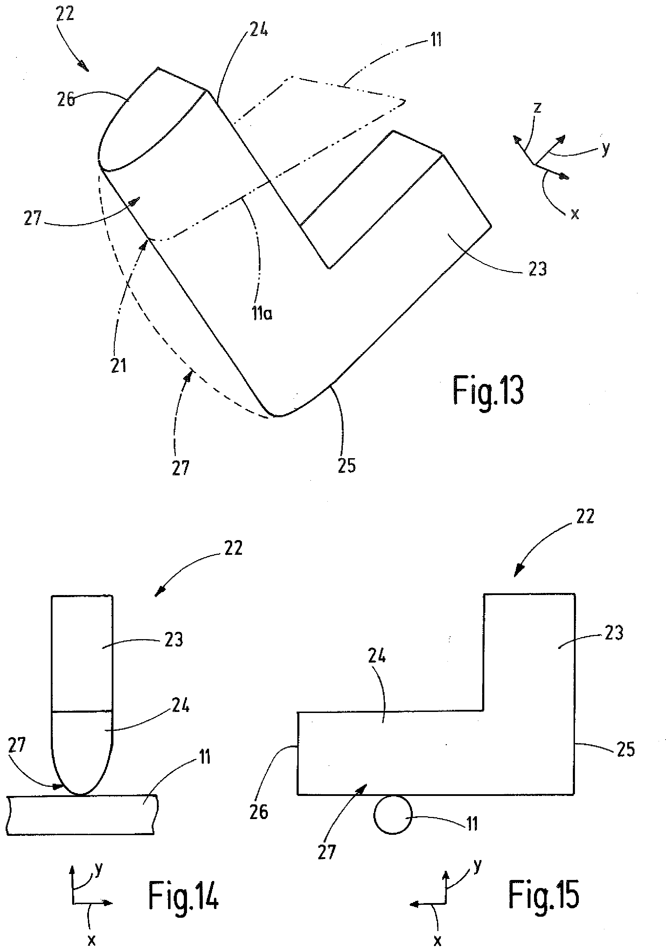

Ein Ausführungsbeispiel einer Ultraschalleinrichtung 22 ist in den Figuren 13-15 veranschaulicht. Die Sonotrode 24 erstreckt sich in einer dritten Raumrichtung z, die rechtwinklig zur ersten Raumrichtung x ausgerichtet ist, von einem ersten Ende 25 zu einem entgegengesetzten zweiten Ende 26. An einem der beiden Enden 25, 26 und beispielsgemäß am ersten Ende 25 ist die Sonotrode 24 mit der Ultraschallquelle 23 verbunden. Die Ultraschalleinrichtung 22 hat dadurch eine im Wesentlichen L-förmige Gestalt. Die Ultraschallquelle 23 ist in der Zeichnung lediglich stark vereinfacht durch das umgebende Gehäuseteil veranschaulicht, das am ersten Ende 25 mit der Sonotrode verbunden ist. Ausgehend vom ersten Ende 25 erstreckt sich das Gehäuse der Ultraschallquelle 23 im Wesentlichen in einer zweiten Raumrichtung y von der Sonotrode 24 weg. Die zweite Raumrichtung y ist rechtwinklig zu der ersten und der dritten Richtung x, z ausgerichtet.

Die Sonotrode 24 hat eine Sonotrodenfläche 27. Beispielsgemäß befindet sich die Sonotrodenfläche außen an einem vorderen Bereich der Sonotrode 24, der in der zweiten Raumrichtung y betrachtet einen Endbereich der Sonotrode 24 bildet. Die Sonotrodenfläche 24 ist um wenigstens eine Achse gekrümmt, wobei sich diese wenigstens eine Achse parallel zur dritten Raumrichtung z erstreckt. Die Krümmung der Sonotrodenfläche 27 kann konstant sein, so dass ein konstanter Krümmungsradius gebildet ist. Die Krümmung kann auch variierende Radien bzw. Krümmungsbeträge aufweisen.

Zusätzlich zu dieser Krümmung um die wenigstens eine sich in die dritte Raumrichtung z erstreckende Achse kann die Sonotrodenfläche 27 eine weitere Krümmung aufweisen, die in Figur 13 gestrichelt veranschaulicht ist. Durch diese zusätzliche Krümmung kann sich die Sonotrodenfläche 27 außerdem um wenigstens eine Achse krümmen, die parallel zur ersten Raumrichtung x ausgerichtet ist. Dadurch können sphärische oder asphärische Sonotrodenflächen 27 mit Krümmungsverläufen in zwei Raumrichtungen bereitgestellt werden.

Wie es sich insbesondere aus den Figuren 13 und 15 ergibt, hat die Sonotrode 24 im Anschluss an das zweite Ende 26 einen Abschnitt, in dem ein Verbundwerkstoffstab 11 um die Sonotrodenfläche 27 gebogen werden kann, ohne dass das Biegen durch die Geometrie bzw. die dreidimensionale Gestalt des gebogenen Verbundwerkstoffstabes 11 oder durch die Ultraschallquelle 23 behindert würde. In Figur 13 ist lediglich beispielhaft und schematisch ein mehrfach gebogener Verbundwerkstoffstab 11 durch die strichpunktierte Linie veranschaulicht. Wenn an einem Verbundwerkstoffstab 11 nacheinander mehrere Biegungen an verschiedenen Biegungsstellen 21 erzeugt werden, kann ein gebogener Abschnitt des Verbundwerkstoffstabes 11 die Sonotrode 24 auf der der Sonotrodenfläche 27 entgegengesetzten Seite übergreifen. Dadurch lassen sich ungehindert durch die Ultraschallquelle 23 auch mehrfach gebogene dreidimensionale Gestalten oder Verläufe des Verbundwerkstoffstabes 11 erzeugen.

Die in den Figuren 13-15 veranschaulichte Ausführungsform der Ultraschalleinrichtung 22 kann bei sämtlichen Ausführungsvarianten der Biegevorrichtung 20 eingesetzt werden.

Zur Biegevorrichtung 20 gehört außerdem eine Abstützeinrichtung 31. Die Abstützeinrichtung 31 weist wenigstens einen Abstützkörper 32 auf, wobei jeder Abstützkörper 32 eine Abstützfläche 33 aufweist. Die Abstützfläche 33 befindet sich auf der der Ultraschalleinrichtung 22 zugewandten Seite der Abstützeinrichtung 31 und ist jeweils dazu eingerichtet, zumindest einen Abschnitt des Verbundwerkstoffstabes 11 abzustützen.

Die Abstützfläche 33 des wenigstens einen Abstützkörpers 32 ist dazu eingerichtet, die Ultraschallwellen zumindest teilweise zu reflektieren. Die durch den Verbundwerkstoffstab 11 hindurchgehenden Ultraschallwellen werden auf der der Sonotrode 24 entgegengesetzten Seite möglichst vollständig in den Verbundwerkstoffstab 11 zurück reflektiert. Dadurch bilden sich beispielsgemäß stehende Ultraschallwellen zwischen der Sonotrode 24 und der Abstützfläche 33. Die Reflexion führt zu einem schnellen Herstellen der Biegbarkeit an der Biegestelle 21. Die Abstützfläche 33 bzw. der wenigstens eine Abstützkörper 32 besteht beispielsweise aus einem schallharten Material, das einen hohen Anteil der Ultraschallwellen an der Grenzschicht zum Verbundwerkstoffstab 11 reflektiert.

Über eine nicht näher dargestellte Achsanordnung kann zwischen der Sonotrode 24 und der Abstützeinrichtung 31 eine Zustellbewegung in die zweite Raumrichtung y ausgeführt werden. Beim Ausführungsbeispiel wird diese Bewegung durch eine lineare Bewegung der Sonotrode 24 und beispielsgemäß der Ultraschalleinrichtung 22 erzeugt. Zusätzlich oder alternativ könnte auch die Abstützeinrichtung 31 linear in die zweite Raumrichtung y bewegbar sein. Bei dem hier beschriebenen Ausführungsbeispiel ist eine solche lineare Bewegung der Abstützeinrichtung 31 in die zweite Raumrichtung y nicht vorgesehen.

Bei dem in den Figuren 3-5 veranschaulichten Ausführungsbeispiel der Biegevorrichtung 20 sind zumindest einige oder alle vorhandenen Abstützkörper 32 der Abstützeinrichtung 31 relativ zueinander bewegbar und beispielsgemäß sind zwei Abstützkörper 32 um eine sich in die dritte Raumrichtung z erstreckende Achse schwenkbar angeordnet. Diese beiden Abstützkörper 32 können beispielsgemäß über ein Schwenkgelenk 34 miteinander verbunden sein. Eine solche unmittelbare Verbindung ist allerdings nicht zwingend erforderlich. Die beiden Abstützkörper 32 könnten auch separat bewegbar und/oder schwenkbar an jeweils einer Einrichtung angeordnet sein.

Die Biegevorrichtung 20 gemäß der Figuren 3-5 arbeitet wie folgt:
Zunächst wird ein Verbundwerkstoffstab 11 an der Abstützeinrichtung 31 bzw. den Abstützflächen 33 der Abstützkörper 32 angeordnet. Anschließend wird die Sonotrode 24 in Kontakt gebracht mit dem Verbundwerkstoffstab 11. Dabei kann die Andrückkraft zwischen der Sonotrode 24 und dem Verbundwerkstoffstab 11 gesteuert oder geregelt werden. Mittels der Ultraschallquelle 23 werden Ultraschallwellen erzeugt und an der Biegestelle 21, an der die Sonotrodenfläche 27 am Verbundwerkstoffstab 11 anliegt, in den Verbundwerkstoffstab 11 eingekoppelt, wodurch sich dieser an der Biegestelle 21 lokal erwärmt (Figur 3).

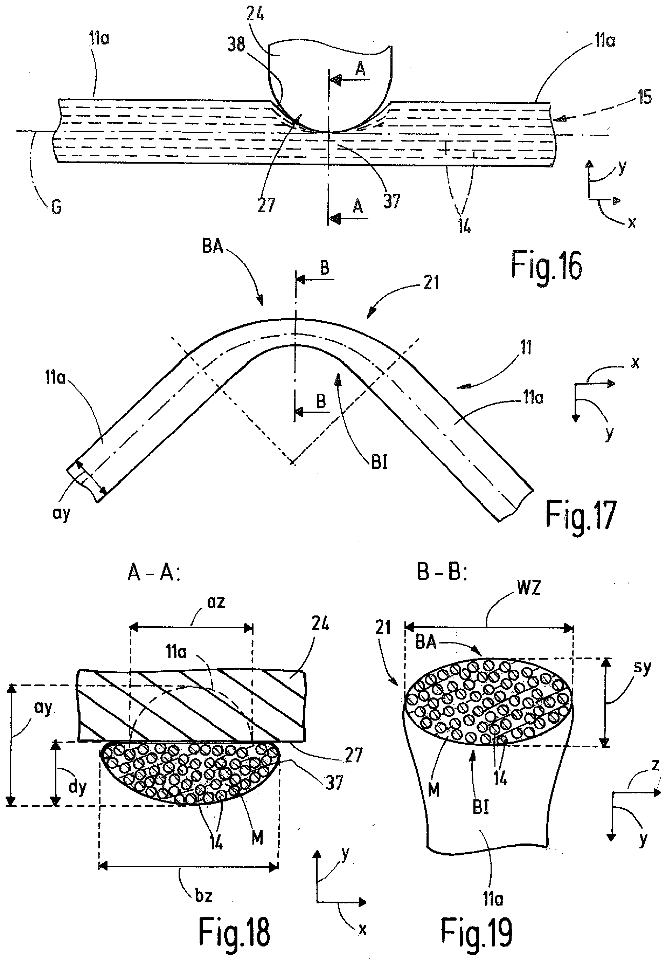

Im Anschluss daran und/oder gleichzeitig zum Einkoppeln der Ultraschallwellen findet eine Zustellbewegung der Sonotrode 24 relativ zur Abstützeinrichtung 31 statt, wodurch die Sonotrodenfläche 27 den Verbundwerkstoffstab 11 an der Biegestelle 21 umformt und dadurch einen Umformabschnitt 37 am Verbundwerkstoffstab 11 bildet (Figur 4). Diese Situation ist schematisch auch in Figur 16 veranschaulicht. Der Umformabschnitt 37 erhält durch das Eindrücken der Sonotrode 24 bzw. der Sonotrodenfläche 27 eine Vertiefung 38 in Form einer Kehle oder Rinne. Bei einer gekrümmten Abstützfläche 33 bildet sich in diesem Verfahrensschritt bereits eine Biegung am Verbundwerkstoffstab 11, wobei die an der Abstützfläche 33 anliegende Seite des Verbundwerkstoffstabes 11 eine Krümmung erhält, die im Wesentlichen der Krümmung der Abstützfläche 33 entspricht.

In Figur 18 ist ein Schnitt durch den Umformabschnitt 37 gezeigt und es ist zu erkennen, dass der Umformabschnitt 37 des Verbundwerkstoffstabes 11 eine Breite bz in die dritte Raumrichtung z aufweist, die größer ist als eine Abmessung az der sich an dem Umformabschnitt 37 anschließenden Stababschnitte 11a in der dritten Raumrichtung z. Gleichzeitig ist eine Dicke dy des Umformabschnitts 37 in der zweiten Raumrichtung y kleiner als eine Abmessung ay der Stababschnitte 11a im Anschluss an den Umformabschnitt 37. Durch diese Änderung der Querschnittskontur bzw. der Abmessungen im Umformabschnitt werden die Verstärkungsfasern 14 von einer späteren Biegungsinnenseite BI des Verbundwerkstoffstabes 11 zur späteren Biegungsaußenseite BA hin verlagert. Dadurch wird an der Biegestelle 21 eine Zugspannung auf die Verstärkungsfasern 14 aufrechterhalten, wenn der Verbundwerkstoffstab 11 im weiteren Verfahren an der Biegestelle 21 gebogen wird. Das Verstärkungsfaserbündel 15 bleibt an der Biegestelle 21 sozusagen in Richtung des Verlaufs des Verbundwerkstoffstabes 11 gestreckt und weist keine oder lediglich eine vernachlässigbare Welligkeit oder Knicke auf.

Die Zustellbewegung zur Ausbildung des Umformabschnitts 37 an der Biegestelle 21 ist schematisch in Figur 4 veranschaulicht. Die Zustellbewegung kann gesteuert oder geregelt ausgeführt werden. Während der Zustellbewegung kann die Relativposition der Sonotrode 24 relativ zum Verbundwerkstoffstab 11 bzw. der Abstützeinrichtung 31, die Geschwindigkeit der Zustellbewegung bzw. der Sonotrode 24, die Beschleunigung der Zustellbewegung bzw. der Sonotrode 24 oder einer Kombination dieser Regelgrößen geregelt werden. Während der Durchführung der Zustellbewegung kann das Abgeben von Ultraschallwellen mittels der Ultraschalleinrichtung 22 unterbleiben. Es kann auch vorteilhaft sein, zumindest zeitweise oder phasenweise Ultraschallwellen abzugeben, um die Umformbarkeit des Verbundwerkstoffstabes 11 an der Biegestelle 21 aufrechtzuerhalten, da sich der Verbundwerkstoffstab durch Konvektion von der Staboberfläche abkühlt.

Die Biegevorrichtung 20 weist wenigstens ein Biegewerkzeug auf, das zum Biegen des Verbundwerkstoffstabes an der Biegestelle eingerichtet ist. Bei dem Ausführungsbeispiel gemäß der Figuren 3-5 sind drei Biegewerkzeuge vorhanden: ein erstes Biegewerkzeug 41 ist durch die Sonotrode 24 bzw. die Sonotrodenfläche 27 gebildet und ein zweites Biegewerkzeug 42 und ein drittes Biegewerkzeug 43 sind jeweils durch einen der beiden Abstützkörper 32 gebildet. Zum Biegen des Verbundwerkstoffstabes 11 an der Biegestelle 21 werden die beiden das zweite und das dritte Biegewerkzeug 42 und 43 bildenden Abstützkörper 32 relativ zueinander geneigt bzw. geschwenkt, wodurch die an den Abstützflächen 33 anliegenden Stababschnitte 11a relativ zueinander abgewinkelt werden (Figur 5). Das durch die Sonotrode 24 gebildete erste Abstützwerkzeug 41 stützt den Verbundwerkstoffstab an der Biegungsinnenseite an der Biegestelle 21 ab. Die Innenkrümmung der Biegungsinnenseite ist durch die Sonotrodenfläche 27 definiert.

Während des Biegens kann dem Verbundwerkstoffstab 11 an der Biegestelle 21 Energie zugeführt werden, um die Biegbarkeit aufrechtzuerhalten, wenn sich der Stab z.B. durch durch Konvektion, Strahlung oder Wärmeleitung abkühlt. Hierzu kann die Ultraschalleinrichtung 22 zumindest zeitweise oder phasenweise Ultraschallwellen abgeben und in den Verbundwerkstoffstab 11 einkoppeln. Vorzugsweise ist eine Abstützfläche 33, an der sich der Verbundwerkstoffstab 11 an der Biegestelle 21 abstützt, konkav ausgebildet, insbesondere derart konkav gekrümmt, dass die Krümmung dem äu-ßeren Krümmungsradius des umgeformten bzw. umgebogenen Verbundwerkstoffstabes 11 entspricht. Dadurch ist die optionale Schalleinkopplung möglichst effizient ist. Alternativ oder zusätzlich kann eine separate Energiequelle 44 vorhanden sein, die dem Verbundwerkstoffstab 11 an der Biegestelle 21 Wärme zuführt, um eine Temperatur an der Biegestelle 21 aufrechtzuerhalten, die eine Biegbarkeit des Verbundwerkstoffstabes 11 sicherstellt. Die zusätzliche Energiequelle 44 kann beispielsweise eine Wärmestrahlungsquelle, wie etwa ein Infrarotstrahler sein.

Im Anschluss an das Biegen des Verbundwerkstoffstabes wird der Verbundwerkstoffstab 11 an der Biegestelle 21 wieder ausgehärtet. Dies erfolgt beispielsgemäß durch Abkühlen der Kunststoffmatrix M an der Biegestelle 21. Das Abkühlen kann beschleunigt werden, wenn der Verbundwerkstoffstab 11 an der Biegestelle 21 ein Kühlmedium C zugeführt wird. Beispielsgemäß weist die Biegevorrichtung 20 eine Kühleinrichtung 45 auf, mittels der das Kühlmedium C auf den Verbundwerkstoffstab 11 an der Biegestelle 21 abgegeben werden kann. Die Kühleinrichtung 45 kann beispielsweise einen Sprühnebel oder einen Gas- bzw. Luftstrom als Kühlmedium C erzeugen und abgeben.

Alternativ oder zusätzlich kann wenigstens eine Komponente der Biegevorrichtung gekühlt werden, beispielsweise die Sonotrode 24 und/oder die Abstützeinrichtung 31 und/oder wenigstens einer der Abstützkörper 32 und/oder wenigstens ein Biegewerkzeug 41, 42, 43. Beispielsweise können durch eine gekühlte bzw. kühlbare Komponente Kühlmittelkanäle hindurchgehen, durch die während des Kühlens ein Kühlmittel strömen kann. Die Zeitdauer für das Kühlen kann dadurch verringert werden.

Die zusätzliche Energiequelle 44 und die Kühleinrichtung 45 sind optional.

Bei dem in den Figuren 3-5 veranschaulichten Ausführungsbeispiel sind die Abstützflächen 33 der Abstützkörper 32 in Erstreckungsrichtung der Stababschnitte 11a derart lang, dass der jeweils zugeordnete Stababschnitt 11a nicht nur punktförmig an einer Stelle, sondern über einen Längenbereich und vorzugsweise seine gesamte Länge bis zur Biegestelle 21 abgestützt wird. Die Abstützkörper 32 können dabei plattenförmig und/oder leistenförmig ausgeführt sein. Die Abstützfläche 33 kann durch die Innenfläche einer Nut oder Rinne gebildet sein, in der der jeweils zugeordnete Stababschnitt 11a liegt. Beispielsweise kann jeder Stababschnitt 11a an den Nutflanken einer Nut der Abstützfläche 33 anliegen und sich dadurch beim Biegen geführt entlang des Nutverlaufs bewegen.

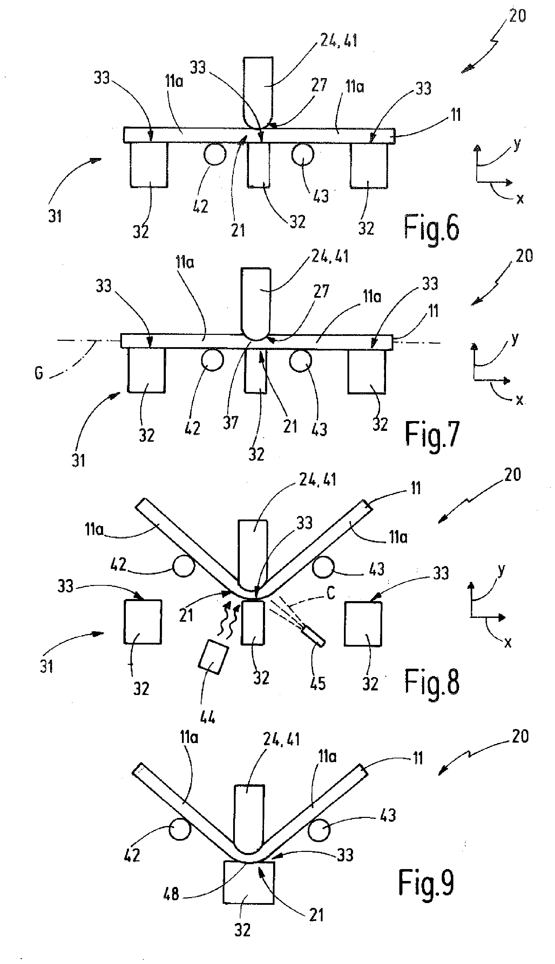

In den Figuren 6-8 ist ein weiteres Ausführungsbeispiel der Biegevorrichtung 20 veranschaulicht. Der Aufbau entspricht im Wesentlichen dem des Ausführungsbeispiels gemäß der Figuren 3-5, so dass auf die vorstehende Beschreibung verwiesen wird. Der Hauptunterschied besteht in der Ausführung der Abstützeinrichtung 31 sowie der Biegewerkzeuge. Die Abstützeinrichtung 31 weist mehrere uns beispielsgemäß drei feststehende Abstützkörper 32 auf, die jeweils eine ebene Abstützfläche 33 haben. Die Abstützflächen 33 mehrerer oder aller vorhandener Abstützkörper 32 können sich in einer gemeinsamen Ebene erstrecken.

Das erste Biegewerkzeug 41 ist auch bei dieser Ausführungsform von der Sonotrode 24 gebildet. Das zweite und das dritte Biegewerkzeug 42, 43 sind separat von der Abstützeinrichtung 31 ausgebildet und können durch jeweils einen Stab oder eine Rolle gebildet sein. Ein zentraler Abstützkörper 32 ist fluchtend zur Sonotrode 24 auf der entgegengesetzten Seite des Verbundwerkstoffstabes 11 angeordnet und stützt den Verbundwerkstoffstab 11 an der Biegestelle 21 gegen die Andrückkraft der Sonotrode 24 ab. Auf beiden Seiten des zentralen Abstützkörpers ist in die erste Raumrichtung x betrachtet jeweils ein Biegewerkzeug 42 bzw. 43 angeordnet. Zum Biegen bewegen sich die Biegewerkzeuge 42, 43 relativ zum ersten Biegewerkzeug 41 (Sonotrode 24), beispielsweise in die zweite Raumrichtung y bzw. innerhalb einer durch die erste und die zweite Raumrichtung x, y aufgespannten Ebene. Dadurch wird der Verbundwerkstoffstab 11 an der Biegestelle 21 um die Sonotrodenfläche 27 herum gebogen.

Im Übrigen entspricht der Ablauf des Verfahrens demjenigen, das im Zusammenhang mit den Figuren 3-5 erläutert wurde, so dass auf die vorstehende Beschreibung verwiesen wird.

Die Einstellung der Verfahrensparameter während des Biegeverfahrens hängen von der Dimension und dem Material des Verbundwerkstoffstabes 11 ab.

Die Gesamtdauer für das Erwärmen des Stabes durch Ultraschall, das Ausprägen des Umformabschnitts 37 und das Biegen beträgt etwa 10-20 Sekunden (bei einem Verbundwerkstoffstab mit etwa 55% Faservolumenanteil und einem Durchmesser von 8 mm). Der Vorschub der Sonotrode kann 1 mm/sec betragen.

Das Abgeben der Ultraschallwellen wird bei einem Ausführungsbeispiel gestartet, wenn ein Auslöseschwellenwert erreicht ist, mit dem die Sonotrode gegen den Verbundwerkstoffstab 11 drückt. Der Auslöseschwellenwert kann beispielsweise 50 Newton betragen. Die Kraft, mit der die Sonotrode 24 gegen den Verbundwerkstoffstab 11 gedrückt wird, kann auf einen Maximalwert begrenzt werden, beispielsweise auf einen Wert von 400 Newton.

Bei dem Ausführungsbeispiel wird das Abgeben von Ultraschallwellen gestoppt, wenn insgesamt eine Gesamtenergiemenge an Ultraschallenergie abgegeben wurde, beispielsweise 2600 Joule (bei einem Verbundwerkstoffstab mit etwa 55% Faservolumenanteil und einem Durchmesser von 8 mm).

Die vorhandenen Biegewerkzeuge 41, 42, 43 üben eine voreingestellte Kraft auf den Verbundwerkstoffstab 11 aus. Sobald die Biegbarkeit an der Biegestelle 21 ausreicht, beginnt daher das Biegen des Verbundwerkstoffstabes 11 an der Biegestelle 21.

Beispielsgemäß wird das Abkühlen des Stabes begonnen, sobald der Grenzwert für die Gesamtenergiemenge erreicht ist. Ohne Zuführen eines separaten Kühlmediums C kann die Kühldauer, bis der Verbundwerkstoffstab 11 an der Biegestelle 21 wieder biegesteif ist, etwa 20 Sekunden (bei einem Verbundwerkstoffstab mit etwa 55% Faservolumenanteil und einem Durchmesser von 8 mm). Diese Zeitdauer kann durch Zuführen eines Kühlmediums C in oder außerhalb eines Bauteils der Biegevorrichtung 20 verkürzt werden.

Die Prozessparameter werden abhängig von der Ausgestaltung der Biegevorrichtung 20, dem Kunststoff des Verbundwerkstoffstabes 11 (amorph/teilkristallin, Dämpfungsfaktor bzw. mechanischer Verlustfaktor, Erweichungstemperatur, Schmelztemperatur, Glasübergangstemperatur, usw.), der Art der verwendeten Fasern, dem Anteil der Fasern am Volumen bzw. der Masse des Verbundwerkstoffstabes, dem Durchmesser des Verbundwerkstoffstabes, usw. angepasst.

Figur 9 veranschaulicht schematisch eine Abwandlung des Ausführungsbeispiels der Biegevorrichtung 20 aus den Figuren 6-8. Dabei hat der zentrale Abstützkörper 32 keine vollständig ebene Abstützfläche 33, sondern die Abstützfläche 33 weist eine konkave Abstützvertiefung 48 auf. Die Krümmung der konkaven Abstützvertiefung 48 entspricht in etwa der Außenkrümmung, die der Verbundwerkstoffstab 11 an der Biegestelle 21 nach dem Ausbilden des Umformabschnitts 37 hat bzw. am Ende des Biegens aufweisen soll. Durch bzw. nach dem Ausbilden des Umformabschnitts 37 und/oder beim Biegen des Verbundwerkstoffstabes 11 gelangt der Verbundwerkstoffstab 11 an der Biegestelle 21 in Eingriff mit der Abstützvertiefung 48 und wird entlang der Au-ßenkrümmung flächig durch die Abstützvertiefung 48 abgestützt.

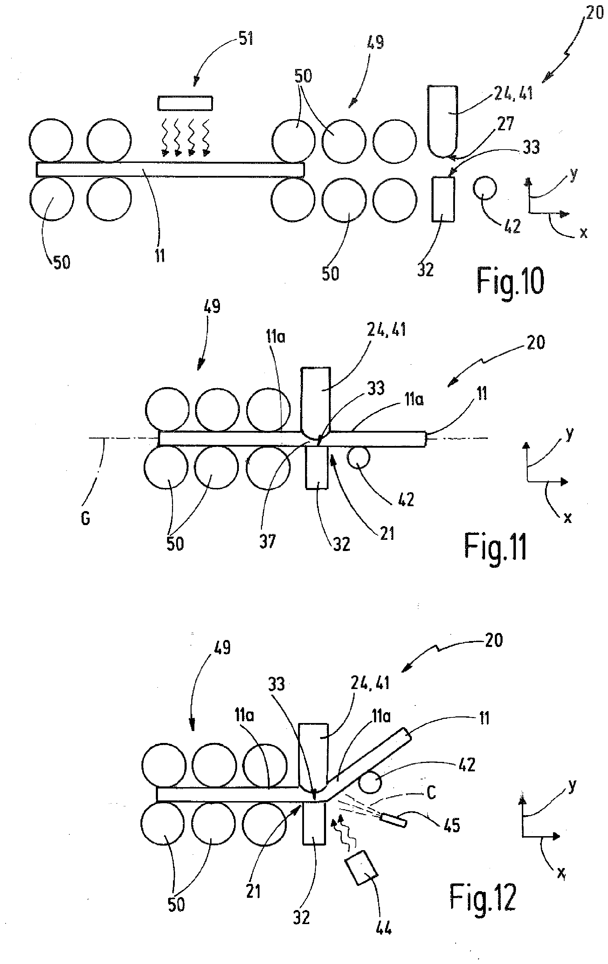

Ein weiteres Ausführungsbeispiel einer Biegevorrichtung 20 ist in den Figuren 10-12 veranschaulicht. Bei diesem Ausführungsbeispiel dient eine Walzenanordnung oder Rollenanordnung 49 mit mehreren Walzen oder Rollen 50 zur Förderung des Verbundwerkstoffstabes 11 in die gewünschte Position, so dass die Biegestelle 21 zwischen der Sonotrode 24 und einem Abstützkörper 32 der Abstützeinrichtung 31 angeordnet ist. Einer der beiden der Stababschnitte 11a bleibt dabei durch die Rollenanordnung 49 beaufschlagt, wenn der Umformabschnitt 37 umgeformt und der Verbundwerkstoffstab 11 gebogen wird (Figuren 11 und 12). Bei diesem Ausführungsbeispiel stellt die Sonotrode 24 wiederum das erste Biegewerkzeug 41 dar. Im Unterschied zu den anderen Ausführungsbeispielen ist lediglich ein weiteres Biegewerkzeug, nämlich das zweite Biegewerkzeug 42 vorhanden, das relativ zum ersten Biegewerkzeug 41 in die zweite Raumrichtung y oder in der durch die erste Raumrichtung x und die zweite Raumrichtung y aufgespannten Ebene bewegbar ist. Das zweite Biegewerkzeug 42 ist analog zum vorhergehenden Ausführungsbeispiel gemäß der Figuren 6-9 durch einen Stab oder eine Rolle gebildet. Die Rollenanordnung 49 ist zum Klemmen bzw. Festhalten des Verbundwerkstoffstabes 11 an dem einen Stababschnitt 11a eingerichtet, während der jeweils andere Stababschnitt 11a durch das zweite Biegewerkzeug 42 beaufschlagt und um die Sonotrodenfläche 27 gebogen wird. Anstelle der Rollenanordnung 49 könnte auch eine andere Einrichtung zum Klemmen des einen Stababschnitts 11a vorhanden sein.

Ansonsten entspricht die Biegevorrichtung 20 sowie das damit durchgeführte Verfahren dem vorhergehenden Ausführungsbeispiel, so dass auf die vorherstehenden Erläuterungen verwiesen werden kann.

In Figur 10 ist eine optionale Ausführung mit einer zusätzlichen Heizeinrichtung 51 schematisch veranschaulicht. Die zusätzliche Heizeinrichtung 51 dient dazu, den Verbundwerkstoffstab 11 vorzuwärmen, bevor er in die Position transportiert wird, in der er umgeformt bzw. gebogen wird. Eine solche Heizeinrichtung 51 kann bei sämtlichen Ausführungsbeispielen der Biegevorrichtung 20 vorhanden sein. Das Aufwärmen des Verbundwerkstoffstabes 11 mit der Heizeinrichtung 51 kann lokal auf einen Bereich begrenzt werden, der die Biegestelle 21 enthält.

Die anhand der Zeichnungen beschriebenen konkreten Ausführungsbeispiele stellen die Erfindung beispielhaft anhand des Biegens eines Verbundwerkstoffstabes 11 dar. Zum Biegen mehrerer Verbundwerkstoffstäbe 11 bzw. eines Gitterkörpers kann die Sonotrodenfläche 27 und/oder die wenigstens eine Abstützfläche 33 und/oder anderer Teile der Biegevorrichtung 20 in der dritten Raumrichtung z entsprechen lang ausgebildet sein. Dies trifft für sämtliche Ausführungsbeispiele zu. Die anhand Verbundwerkstoffstabes 11 einer beschriebenen Funktion gilt entsprechend für mehrere Verbundwerkstoffstäbe 11 bzw. einen Gitterkörper.

In den Figuren 17 und 19 ist schematisch der gebogene Verbundwerkstoffstab 11 veranschaulicht. An der Biegestelle 21 hat der Biegestab in der zweiten Raumrichtung y betrachtet eine Biegungsinnenseite BI mit einer Innenkrümmung und eine davon abgewandte, entgegengesetzte Biegungsaußenseite BA mit einer Außenkrümmung. Die Innenkrümmung und die Außenkrümmung können einen konstanten Betrag aufweisen oder entlang des Verlaufs der Biegung variierende Krümmungen bzw. variierende Radien aufweisen. Die Biegungsinnenseite BI liegt beim Biegen an der Sonotrodenfläche 27 an. Die Innenkrümmung wird somit durch den Krümmungsverlauf der Sonotrodenfläche 27 definiert. Die Biegungsaußenseite BA liegt beim Biegen vorzugsweise an einer Abstützfläche 33 an.

An der Biegestelle 21 hat der gebogene Verbundwerkstoffstab 11 in der zweiten Raumrichtung y betrachtet eine Stärke sy und in der dritten Raumrichtung z betrachtet eine Breite bz. Die Breite bz ist größer als die Breite bzw. Abmessung az des Stababschnitts 11a außerhalb der Biegestelle 21 in der dritten Raumrichtung z und ist in etwa so groß wie die Breite bz des Umformabschnitts 37 oder etwas kleiner. Die Dicke oder Stärke sy in der zweiten Raumrichtung y ist an der Biegestelle 21 kleiner als die Abmessung ay des Stababschnitts 11a außerhalb der Biegestelle 21 und mindestens so groß wie die Dicke dy des Umformabschnitts 37 in der zweiten Raumrichtung y. Durch diese Änderung der Querschnittsform des Verbundwerkstoffstabes 11 an der Biegestelle 21 bleiben die Verstärkungsfasern 14 gestreckt bzw. unter Zug und weisen durch das Herstellen der Biegung im Bereich der Biegungsinnenseite BI keine Welligkeit auf. Dadurch kann die Zugfestigkeit des gebogenen Verbundwerkstoffstabes 11 erhalten bleiben.

Bei sämtlichen Ausführungsbeispielen ist es möglich, dass während des Umformens zur Ausbildung des Umformabschnitts 37 und/oder während des Biegens Ultraschallwellen an der Biegestelle 21 in den Verbundwerkstoffstab 11 eingekoppelt werden. Dadurch wird dem Verbundwerkstoffstab 11 Energie zugeführt und die Biegestelle 21 des Verbundwerkstoffstabes 11 kann zumindest einer geforderten Mindesttemperatur entsprechen, um die Umformbarkeit bzw. die Biegbarkeit aufrechtzuerhalten. Dadurch können Wärmeverluste durch Konvektion ausgeglichen werden. Es kann dabei vorgesehen sein, dass die Temperatur des Verbundwerkstoffstabes 11 an der Biegestelle 21 geregelt wird. Es ist auch möglich, eine Zeitdauer, während der Ultraschallwellen in den Verbundwerkstoffstab eingekoppelt werden und/oder eine Ultraschallleistung der abgegebenen Ultraschallwellen während dem Umformen oder dem Biegen zu regeln. Auch die insgesamt während dem Umformen oder dem Biegen abgegebene Ultraschallenergie kann gesteuert oder geregelt werden. Schließlich kann auch die Andrückkraft zwischen der Sonotrode 24 und dem Verbundwerkstoffstab 11 gesteuert oder geregelt werden. Auch eine Kombination der vorstehend erwähnten Steuerungen oder Regelungen ist möglich.

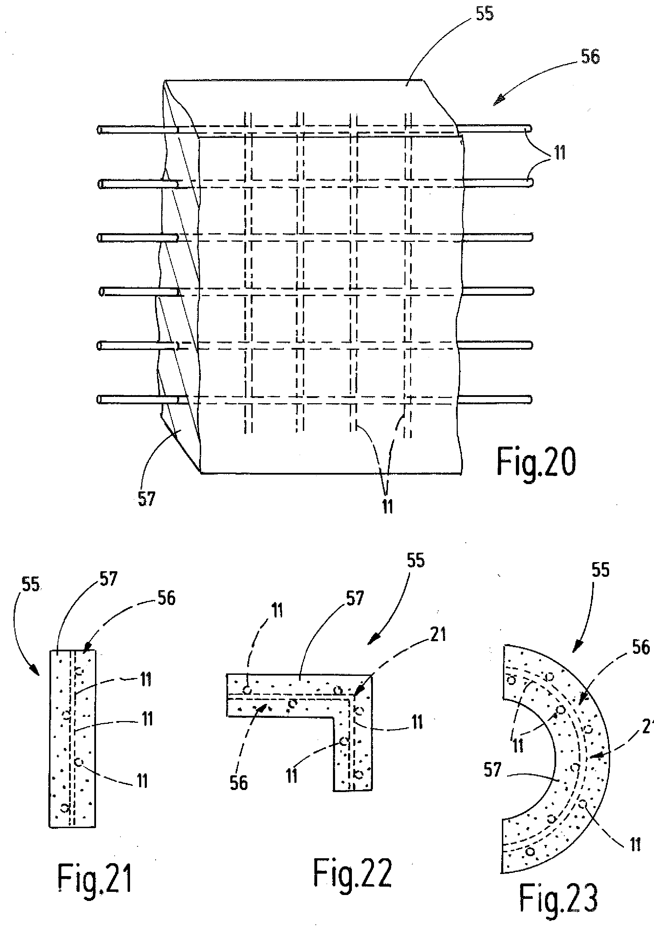

In den Figuren 20-23 ist jeweils schematisch ein Baustoffkörper 55 mit einer Bewehrungsanordnung 56 veranschaulicht. Die Bewehrungsanordnung 56 enthält einen oder mehrere Bewehrungsstäbe 11. Diese sind in eine Baustoffmatrix 57 des Baustoffkörpers 55 eingebunden. Die Bewehrungsstäbe 11 können ein Gitter oder eine andere geeignete zweidimensionale oder dreidimensionale Bewehrungsanordnung 56 bilden. Wie es in den Figuren 22 und 23 veranschaulicht ist, kann es abhängig von der Form des Baustoffkörpers 55 erforderlich oder vorteilhaft sein, einen oder mehrere Bewehrungsstäbe 11 an einer oder mehreren Biegestellen 21 zu biegen. Dies kann in einer Werkshalle oder auf der Baustelle vor Ort mit dem vorstehend beschriebenen Biegeverfahren und der vorstehend beschriebenen Biegevorrichtung 20 durchgeführt werden. Unter Verwendung der Biegevorrichtung 20 bzw. unter Einsatz des Biegeverfahrens kann somit ein Baustoffkörper 55 mit wenigstens einem gebogenen Verbundwerkstoffstab 11 hergestellt werden.

Die Erfindung betrifft ein Biegeverfahren und eine Biegevorrichtung 20, wobei ein Verbundwerkstoffstab 11 mit einem Verstärkungsfaserbündel 15, das in eine Kunststoffmatrix M eingebettet ist, an einer Biegestelle 21 gebogen wird. Um eine Biegbarkeit zu ermöglichen, wird der Verbundwerkstoffstab 11 an der Biegestelle 21 lokal erwärmt. Hierzu dient eine Ultraschalleinrichtung 22 mit einer Sonotrode 24. Nach dem Erwärmen der Biegestelle wird durch eine Zustellbewegung zwischen dem Verbundwerkstoffstab 11 und der Sonotrode 24 ein Bereich des Verbundwerkstoffstabes 11 an der Biegestelle 21 zu einem Umformabschnitt 37 umgeformt, dessen Außenabmessungen verschieden sind von den Außenabmessungen der Stababschnitte 11a des Verbundwerkstoffstabes 11, die an die Biegestelle 21 angrenzen. Anschließend werden die beiden Stababschnitte 11a relativ zueinander bewegt bzw. abgewinkelt, so dass sich der Verbundwerkstoffstab 11 an der Biegestelle 21 krümmt. Vorzugsweise schützt sich der Verbundwerkstoffstab 11 an der Sonotrode 24 ab. Ist die gewünschte Biegung erreicht, wird der Verbundwerkstoffstab 11 an der Biegestelle 21 ausgehärtet.

### Bezugszeichenliste:

- 10: Pultrusionseinrichtung
- 11: Verbundwerkstoffstab
- 11a: Stababschnitt
- 12: Gatter
- 13: Spule
- 14: Verstärkungsfaser
- 15: Verstärkungsfaserbündel
- 16: Bad
- 17: Form
- 18: Abzugseinrichtung
- 19: Trennwerkzeug
- 20: Biegevorrichtung
- 21: Biegestelle
- 22: Ultraschalleinrichtung
- 23: Ultraschallquelle
- 24: Sonotrode
- 25: erstes Ende der Sonotrode
- 26: zweites Ende der Sonotrode
- 27: Sonotrodenfläche

- 31: Abstützeinrichtung
- 32: Abstützkörper
- 33: Abstützfläche
- 34: Schwenkgelenk

- 37: Umformabschnitt
- 38: Vertiefung

- 41: erstes Biegewerkzeug
- 42: zweites Biegewerkzeug
- 43: drittes Biegewerkzeug
- 44: Energiequelle
- 45: Kühleinrichtung

- 48: Abstützvertiefung
- 49: Rollenanordnung
- 50: Rolle
- 51: Heizeinrichtung

- 55: Baustoffkörper
- 56: Bewehrungsanordnung
- 57: Baustoffmatrix

- ay: Abmessung des Stababschnitts in der zweiten Raumrichtung
- az: Abmessung des Stababschnitts in der dritten Raumrichtung
- bz: Breite des Umformabschnitts
- C: Kühlmedium
- dy: Dicke des Umformabschnitts
- K: Kunststoff
- M: Kunststoffmatrix
- S: Schwenkachse
- x: erste Raumrichtung
- y: zweite Raumrichtung
- z: dritte Raumrichtung

## Patentansprüche

1. Biegeverfahren zum Biegen wenigstens eines Verbundwerkstoffstabes (11) an einer Biegestelle (21), der ein in einer ausgehärteten Kunststoffmatrix eingebettetes Verstärkungsfaserbündel (15) mit mehreren Verstärkungsfasern (14) aufweist, mit folgenden Schritten:
- Anordnen einer Sonotrode (24) einer Ultraschalleinrichtung (22) an einer Biegestelle (21), wobei sich die beiden an die Biegestelle (21) angrenzenden Stababschnitte (11a) des wenigstens einen Verbundwerkstoffstabes (11) in einer ersten Raumrichtung (x) erstrecken,
- Erwärmen der Kunststoffmatrix (M) des wenigstens einen Verbundwerkstoffstabes (11) an der Biegestelle (21) durch Einkoppeln von Ultraschallwellen in den wenigstens einen Verbundwerkstoffstab (11) an der Biegestelle (21),
- Umformen des wenigstens einen Verbundwerkstoffstabes (11) zur Bildung eines Umformabschnitts (37) an der Biegestelle (21) durch eine Zustellbewegung zwischen der Sonotrode (24) und dem wenigstens einen Verbundwerkstoffstab (11) in eine zweite Raumrichtung (y), die radial zu der herzustellenden Biegung an der Biegestelle (21) ausgerichtet ist, wobei durch das Erzeugen des Umformabschnitts (37) der Abschnitt des Verstärkungsfaserbündels entlang der Biegestelle unter Zug gesetzt und in eine gewünschte Lage gebracht wird,
- Biegen des wenigstens einen Verbundwerkstoffstabs (11) an der Biegestelle (21),
- Aushärten der Kunststoffmatrix (M) an der Biegestelle (21).

2. Biegeverfahren nach Anspruch 1,
**dadurch gekennzeichnet, dass** die Ausrichtung der an die Biegestelle (21) angrenzenden Stababschnitte (11a) des wenigstens einen Verbundwerkstoffstabs (11) relativ zueinander während des Ausbildens des Umformabschnitts (37) unverändert bleibt.

3. Biegeverfahren nach Anspruch 1 oder 2,
**dadurch gekennzeichnet, dass** der Umformabschnitt (37) des wenigstens einen Verbundwerkstoffstabs (11) eine Breite (bz) in einer dritten Raumrichtung (z) aufweist, die größer ist als die Abmessung (az) der an die Biegestelle (21) angrenzenden Stababschnitte (11a) in der dritten Raumrichtung (z), wobei die dritte Raumrichtung (z) rechtwinkelig zu der ersten Raumrichtung (x) und der zweiten Raumrichtung (y) ausgerichtet ist.

4. Biegeverfahren nach einem der vorhergehenden Ansprüche, **dadurch gekennzeichnet, dass** der Umformabschnitt (37) des wenigstens einen Verbundwerkstoffstabs (11) eine Dicke (dy) in der zweiten Raumrichtung (y) aufweist, die kleiner ist als die Abmessung (ay) der an die Biegestelle (21) angrenzenden Stababschnitte (11a) in der zweiten Raumrichtung (y).

5. Biegeverfahren nach einem der vorhergehenden Ansprüche, **dadurch gekennzeichnet, dass** der wenigstens eine Verbundwerkstoffstab (11) an der Biegestelle (21) eine Biegungsinnenseite (BI) mit einer Innenkrümmung und eine der Biegungsinnenseite (BI) bezüglich einer Mittelachse des wenigstens einen Verbundwerkstoffstabs (11) entgegengesetzte Biegungsaußenseite (BA) mit einer Au-ßenkrümmung aufweist, wobei die Innenkrümmung des wenigstens einen Verbundwerkstoffstabs (11) größer ist als die Außenkrümmung, und wobei keine der Verstärkungsfasern (14) an der Biegestelle (21) eine Krümmung aufweist, die größer ist als die Innenkrümmung.

6. Biegeverfahren nach einem der vorhergehenden Ansprüche, **dadurch gekennzeichnet, dass** während der Zustellbewegung zur Bildung des Umformabschnitts (37) und/oder während des Biegens zumindest phasenweise Ultraschallwellen von der Sonotrode (24) abgegeben werden.

7. Biegeverfahren nach einem der vorhergehenden Ansprüche, **dadurch gekennzeichnet, dass** dem wenigstens einen Verbundwerkstoffstab (11) an der Biegestelle (21) während des Biegens zumindest phasenweise Energie durch eine weitere Energiequelle (44) zugeführt wird.

8. Biegeverfahren nach einem der vorhergehenden Ansprüche, **dadurch gekennzeichnet, dass** während der Bildung des Umformabschnitts (37) und/oder während des Biegens wenigstens eine der nachfolgenden Regelgrößen geregelt wird:
- eine während der Zustellbewegung und/oder während des Biegens abgegebene Ultraschallenergie,
- eine Zeitdauer, während der Ultraschallwellen während der Zustellbewegung und/oder während des Biegens abgegeben werden,
- eine Leistung der abgegebenen Ultraschallwellen,
- eine Temperatur des wenigstens einen Verbundwerkstoffstabes (11) an dem Umformabschnitt (37) oder an der Biegestelle (21),
- eine Andrückkraft zwischen der Sonotrode (24) und dem wenigstens einen Verbundwerkstoffstab (11),
- eine Position der Zustellbewegung,
- eine Biege- oder Winkelposition der Stababschnitte benachbart zur Biegestelle.

9. Biegeverfahren nach einem der Ansprüche 1 bis 5, **dadurch gekennzeichnet, dass** während der Zustellbewegung zur Bildung des Umformabschnitts (37) und/oder während des Biegens das Abgeben von Ultraschallwellen durch die Sonotrode (24) unterbleibt.

10. Biegeverfahren nach einem der vorhergehenden Ansprüche, **dadurch gekennzeichnet, dass** die Zustellbewegung während der Bildung des Umformabschnitts (37) wenigstens eine der nachfolgenden Regelgrößen geregelt wird:
- eine Relativposition zwischen der Sonotrode (24) und dem wenigstens einen Verbundwerkstoffstab (11),
- eine Geschwindigkeit der Zustellbewegung,
- einer Beschleunigung der Zustellbewegung.

11. Biegeverfahren nach einem der vorhergehenden Ansprüche, **dadurch gekennzeichnet, dass** das Biegen um eine gekrümmte Sonotrodenfläche (27) der Sonotrode (24) erfolgt, wobei die Sonotrodenfläche (27) um wenigstens eine Achse gekrümmt ist, die sich parallel zu einer dritte Raumrichtung (z) erstreckt, wobei die dritte Raumrichtung (z) rechtwinkelig zu der ersten Raumrichtung (x) und der zweiten Raumrichtung (y) ausgerichtet ist.

12. Biegeverfahren nach Anspruch 11,
**dadurch gekennzeichnet, dass** die Sonotrodenfläche (27) zusätzlich um wenigstens eine Achse gekrümmt ist, die sich parallel zu der ersten Raumrichtung (x) erstreckt.

13. Biegeverfahren nach einem der vorhergehenden Ansprüche, **dadurch gekennzeichnet, dass** die Sonotrode (24) während des Biegens stillsteht.

14. Biegeverfahren nach einem der Ansprüche 1 bis 12,
**dadurch gekennzeichnet, dass** sich die Sonotrode (24) während des Biegens in der zweiten Raumrichtung (y) bewegt.

15. Biegeverfahren nach einem der vorhergehenden Ansprüche, **dadurch gekennzeichnet, dass** zum Aushärten des wenigstens einen Verbundwerkstoffstabes (11) ein Kühlmedium (C) zu der Biegestelle (21) zugeführt wird.

16. Biegeverfahren nach Anspruch 15,
**dadurch gekennzeichnet, dass** das Kühlmedium innerhalb eines an der Biegestelle (21) mit dem wenigstens einen Verbundwerkstoffstab (11) in Kontakt stehenden Bauteil strömt und/oder dass das Kühlmedium (C) direkt mit Verbundwerkstoffstab (11) in Kontakt gebracht wird.

17. Biegeverfahren nach einem der vorhergehenden Ansprüche, **dadurch gekennzeichnet, dass** die Kunststoffmatrix (M) des wenigstens einen Verbundwerkstoffstabs (11) einen reversibel quervernetzten Kunststoff (K) aufweist.

18. Biegeverfahren nach einem der vorhergehenden Ansprüche, **dadurch gekennzeichnet, dass** die Kunststoffmatrix (M) des wenigstens einen Verbundwerkstoffstabs (11) einen thermoplastischen Kunststoff (K) aufweist.

19. Biegevorrichtung (20), die dazu eingerichtet ist, wenigstens einen Verbundwerkstoffstab (11) an einer Biegestelle (21) zu biegen, der ein in einer ausgehärteten Kunststoffmatrix (M) eingebettetes Verstärkungsfaserbündel (15) mit mehreren Verstärkungsfasern (14) aufweist, wobei sich die beiden an die Biegestelle (21) angrenzenden Stababschnitte (11a) des wenigstens einen Verbundwerkstoffstabes (11) in einer ersten Raumrichtung (x) erstrecken,
mit einer eine Sonotrode (24) und eine Ultraschallquelle (23) aufweisenden Ultraschalleinrichtung (22), wobei die Sonotrode (24) in einer zweiten Raumrichtung (y) rechtwinkelig zu der ersten Raumrichtung (x) bewegbar ist,
mit einer Abstützeinrichtung (31) aufweisend wenigstens einen Abstützkörper (32), wobei jeder Abstützkörper (32) eine Abstützfläche (33) auf der der Sonotrode (24) entgegengesetzten Seite aufweist zum Abstützen zumindest jeweils eines Abschnitts des wenigstens einen Verbundwerkstoffstabes (11),
wobei die Biegevorrichtung (20) dazu eingerichtet ist, das Biegeverfahren mit folgenden Schritten durchzuführen:
- Anordnen der Sonotrode (24) der Ultraschalleinrichtung (22) an der Biegestelle (21), wobei sich die beiden an die Biegestelle (21) angrenzenden Stababschnitte (11a) des wenigstens einen Verbundwerkstoffstabes (11) in einer ersten Raumrichtung (x) erstrecken,
- Erwärmen der Kunststoffmatrix (M) des wenigstens einen Verbundwerkstoffstabes (11) an der Biegestelle (21) durch Einkoppeln von Ultraschallwellen in den wenigstens einen Verbundwerkstoffstab (11) an der Biegestelle (21),
- Umformen des wenigstens einen Verbundwerkstoffstabes (11) zur Bildung eines Umformabschnitts (37) an der Biegestelle (21) durch eine Zustellbewegung zwischen der Sonotrode (24) und dem wenigstens einen Verbundwerkstoffstab (11) in eine zweite Raumrichtung (y), die radial zu der herzustellenden Biegung an der Biegestelle (21) ausgerichtet ist, wobei durch das Erzeugen des Umformabschnitts (37) der Abschnitt des Verstärkungsfaserbündels entlang der Biegestelle unter Zug gesetzt und in eine gewünschte Lage gebracht wird, wobei die Abstützfläche (33) des wenigstens einen Abstützkörpers (32) derart ausgebildet ist, dass der wenigstens eine Verbundwerkstoffstab (11) nach dem Ausbilden des Umformabschnitts (37) und beim Biegevorgang an der Biegestelle (21) entlang des gesamten durch die Abstützfläche (33) abgestützten Abschnitts des wenigstens einen Verbundwerkstoffstabs (11) an der Abstützfläche (33) anliegt,
- Biegen des wenigstens einen Verbundwerkstoffstabs (11) an der Biegestelle (21),
- Aushärten der Kunststoffmatrix (M) an der Biegestelle (21).

20. Biegevorrichtung nach Anspruch 19,
**dadurch gekennzeichnet, dass** wenigstens ein Biegewerkzeug (41, 42, 43) vorhanden ist, das zum Biegen des wenigstens einen Verbundwerkstoffstabes (11) an der Biegestelle (21) eingerichtet ist.

## Claims

1. Bending method for bending at least one composite bar (11) at a bending location (21) that comprises a reinforcement fiber bundle (15) with multiple reinforcement fibers (14) embedded in a cured plastic matrix comprising the following steps:
- Arranging a sonotrode (24) of an ultrasonic device (22) at a bending location (21), wherein the two bar sections (11a) of the at least one composite bar (11) that adjoin the bending location (21) extend in a first spatial direction (x),
- Heating of the plastic matrix (M) of the at least one composite bar (11) at the bending location (21) by coupling of ultrasonic waves in the at least one composite bar (11) at the bending location (21),
- Deforming the at least one composite bar (11) for formation of a deformed section (37) at the bending location (21) by an infeed movement between the sonotrode (24) and the at least one composite bar (11) in a second spatial direction (y) that is orientated radial to the bend that is to be created at the bending location (21), wherein by creation of the deformed section (37) the section of the reinforcement fiber bundle is tensioned along the bending location and is brought in a desired position,
- Bending of the at least one composite bar (11) at the bending location (21),
- Curing of the plastic matrix (M) at the bending location (21).

2. Bending method according to claim 1, **characterized in that** the orientation of the bar sections (11a) of the at least one composite bar (11) remain unchanged relative to each other during the formation of the deformed section (37).

3. Bending method according to claim 1 or 2, **characterized in that** the deformed section (37) of the at least one composite bar (11) comprises a width (bz) in a third spatial direction (z) that is larger than the dimension (az) in the third spatial direction (z) of the bar sections (11a) adjoining the bending location (21), wherein the third spatial direction (z) is orientated orthogonal to the first spatial direction (x) and the second spatial direction (y).

4. Bending method according to any of the preceding claims, **characterized in that** the deformed section (37) of the at least one composite bar (11) has a thickness (dy) in the second spatial direction (y) that is smaller than the dimension (ay) in the second spatial direction (y) of the bar sections (11a) adjoining the bending location (21).

5. Bending method according to any of the preceding claims, **characterized in that** the at least one composite bar (11) has at the bending location (21) a bend inner side (BI) with an inner curvature and with reference to a center axis of the at least one composite bar (11) an opposite bend outer side (BA) with an outer curvature, wherein the inner curvature of the at least one composite bar (11) is larger than the outer curvature and wherein none of the reinforcement fibers (14) have a curvature at the bending location (21) that is larger than the inner curvature.

6. Bending method according to any of the preceding claims, **characterized in that** at least during phases during the infeed movement for formation of the deformed section (37) and/or during bending ultrasonic waves are emitted from the sonotrode (24).

7. Bending method according to any of the preceding claims, **characterized in that** at least during phases energy is supplied by a further energy source (44) to the at least one composite bar (11) at the bending location (21) during bending.

8. Bending method according to any of the preceding claims, **characterized in that** during the formation of the deformed section (37) and/or during bending at least one of the following control parameters are feedback controlled:
- An ultrasonic energy output during the infeed movement and/or during bending,
- A time duration during which ultrasonic waves are emitted during the infeed movement and/or during bending,
- A power of the emitted ultrasonic waves,
- A temperature of the at least one composite bar (11) at the deformed section (37) or at the bending location (21),
- A pressure force between the sonotrode (24) and the at least one composite bar (11),
- A position of the infeed movement,
- A bend or angle position of the bar sections adjoining the bending location.

9. Bending method according to any of the claims 1-5, **characterized in that** during the infeed movement for formation of the deformed section (37) and/or during bending, the emission of ultrasonic waves by the sonotrode (24) is omitted.

10. Bending method according to any of the preceding claims, **characterized in that** the infeed movement during the formation of the deformed section (37) at least one of the following control parameters is feedback controlled:
- A relative position between the sonotrode (24) and the at least one composite bar (11),
- A velocity of the infeed movement,
- An acceleration of the infeed movement.

11. Bending method according to any of the preceding claims, **characterized in that** bending is carried out about a curved sonotrode surface (27) of the sonotrode (24), wherein the sonotrode surface (27) is curved about at least one axis that extends parallel to a third spatial direction (z), wherein the third spatial direction (z) is orientated orthogonal to the first spatial direction (x) and the second spatial direction (y).

12. Bending method according to claim 11, **characterized in that** the sonotrode surface (27) is in addition curved about at least one axis that extends parallel to the first spatial direction (x).

13. Bending method according to any of the preceding claims, **characterized in that** the sonotrode (24) remains stationary during bending.

14. Bending method according to any of the claims 1-12, **characterized in that** the sonotrode (24) moves in the second spatial direction (y) during bending.

15. Bending method according to any of the preceding claims, **characterized in that** a cooling medium (C) is supplied to the bending location (21) for curing the at least one composite bar (11).

16. Bending method according to claim 15, **characterized in that** the cooling medium flows within a component that is in contact with the at least one composite bar (11) at the bending location (21) and/or that the cooling medium (C) is brought into direct contact with the composite bar (11).

17. Bending method according to any of the preceding claims, **characterized in that** the plastic matrix (M) of the at least one composite bar (11) comprises a reversibly cross-linked plastic (K).

18. Bending method according to any of the preceding claims, **characterized in that** the plastic matrix (M) of the at least one composite bar (11) comprises a thermoplastic plastic (K).

19. Bending device (20) that is configured to bend at least one composite bar (11) at a bending location that comprises a reinforcement fiber bundle (15) with multiple reinforcement fibers embedded in a cured plastic matrix (M), wherein the two bar sections (11a) of the at least one composite bar (11) adjoining the bending location (21) extend in a first spatial direction (x),
having an ultrasonic device (22) comprising a sonotrode (24) and an ultrasound source (23), wherein the sonotrode (24) is moveable in a second spatial direction (y) orthogonal to the first spatial direction (x),
having a support device (31) comprising at least one support body (32), wherein each support body (32) has a support surface (33) at the side opposite the sonotrode (24) for supporting at least one section of the at least one composite bar (11) respectively,
wherein the bending device (20) is configured to carry out the bending method comprising the following steps:
- Arranging a sonotrode (24) of an ultrasonic device (22) at a bending location (21), wherein the two bar sections (11a) of the at least one composite bar (11) that adjoin the bending location (21) extend in a first spatial direction (x),
- Heating of the plastic matrix (M) of the at least one composite bar (11) at the bending location (21) by coupling of ultrasonic waves in the at least one composite bar (11) at the bending location (21),
- Deforming the at least one composite bar (11) for formation of a deformed section (37) at the bending location (21) by an infeed movement between the sonotrode (24) and the at least one composite bar (11) in a second spatial direction (y) that is orientated radial to the bend that is to be created at the bending location (21), wherein by creation of the deformed section (37) the section of the reinforcement fiber bundle is tensioned along the bending location and is brought in a desired position, wherein the support surface (33) of the at least one support body (32) is configured so that after formation of the deformed section (37) and during the bending process at the bending location (21) the at least one composite bar (11) abuts against the support surface (33) along the entire section of the at least one composite bar (11) supported by the support surface (33),
- Bending of the at least one composite bar (11) at the bending location (21),
- Curing of the plastic matrix (M) at the bending location (21).

20. Bending device according to claim 19, **characterized in that** at least one bending tool (41, 42, 43) is present that is configured for bending the at least one composite bar (11) at the bending location (21).

## Revendications

1. Procédé de pliage destiné au pliage, en un point de pliage (21), d'au moins une tige en matériau composite (11) qui présente un faisceau de fibres de renfort (15) comportant plusieurs fibres de renfort (14) et noyé dans une matrice en matière plastique durcie, comprenant les étapes suivantes :
- mise en place d'une sonotrode (24) d'un dispositif à ultrasons (22) sur un point de pliage (21), les deux parties de tige (11a) de la tige composite (11), au nombre d'au moins une, qui sont adjacentes au point de pliage (21), s'étendant dans une première direction spatiale (x),
- chauffage de la matrice en matière plastique (M) de la tige composite (11), au nombre d'au moins une, au point de pliage (21), par couplage d'ondes ultrasonores dans la tige composite (11), au nombre d'au moins une, au point de pliage (21),
- formage de la tige composite (11), au nombre d'au moins une, pour réaliser une partie mise en forme (37) au point de pliage (21), par un mouvement d'approche entre la sonotrode (24) et la tige composite (11), au nombre d'au moins une, dans une deuxième direction spatiale (y) qui est orientée radialement par rapport au pliage devant être réalise au point de pliage (21), sachant que la réalisation de la partie mise en forme (37) a pour effet que la partie du faisceau de fibres de renfort est soumise à une traction le long du point de pliage et est amenée dans une position souhaitée,
- pliage de la tige composite (11), au nombre d'au moins une, au point de pliage (21),
- durcissement de la matrice en matière plastique (M) au point de pliage (21).

2. Procédé de pliage selon la revendication 1, **caractérisé en ce que** l'orientation, l'une par rapport à l'autre, des parties de tige (11a) de la tige composite (11), au nombre d'au moins une, qui sont adjacentes au point de pliage (21), reste inchangée pendant la réalisation de la partie mise en forme (37).

3. Procédé de pliage selon la revendication 1 ou 2, **caractérisé en ce que** la partie mise en forme (37) de la tige composite (11), au nombre d'au moins une, présente une largeur (bz) dans une troisième direction spatiale (z), qui est plus grande que la dimension (az) des parties de tige (11a) adjacentes au point de pliage (21), dans la troisième direction spatiale (z), la troisième direction spatiale (z) étant orientée à angle droit par rapport à la première direction spatiale (x) et la deuxième direction spatiale (y).

4. Procédé de pliage selon l'une des revendications précédentes, **caractérisé en ce que** la partie mise en forme (37) de la tige composite (11), au nombre d'au moins une, présente une épaisseur (dy) dans la deuxième direction spatiale (y), qui est plus faible que la dimension (ay) des parties de tige (11a) adjacentes au point de pliage (21), dans la deuxième direction spatiale (y).

5. Procédé de pliage selon l'une des revendications précédentes, **caractérisé en ce que** de la tige composite (11), au nombre d'au moins une, présente, au point de pliage (21), un côté interne de pliage (BI) avec une courbure intérieure et un côté externe de pliage (BA), avec une courbure extérieure, qui est opposé au côté interne de pliage (BI) par rapport à un axe médian de la tige composite (11), au nombre d'au moins une, la courbure intérieure de la tige composite (11), au nombre d'au moins une, étant supérieure à la courbure extérieure, et aucune des fibres de renfort (14) ne présentant au point de pliage (21) une courbure qui est supérieure à la courbure intérieure.

6. Procédé de pliage selon l'une des revendications précédentes, **caractérisé en ce que** pendant le mouvement d'approche pour la réalisation de la partie mise en forme (37) et/ou pendant le pliage, des ondes ultrasonores sont émises au moins par phases par la sonotrode (24).

7. Procédé de pliage selon l'une des revendications précédentes, **caractérisé en ce que** pendant le pliage, de l'énergie est apportée au moins par phases par une source d'énergie (44) supplémentaire à la tige composite (11), au nombre d'au moins une, au point de pliage (21).

8. Procédé de pliage selon l'une des revendications précédentes, **caractérisé en ce que** pendant la réalisation de la partie mise en forme (37) et/ou pendant le pliage, au moins une des grandeurs réglées suivantes est réglée :
- une énergie ultrasonore délivrée pendant le mouvement d'approche et/ou pendant le pliage,
- un laps de temps au cours duquel des ondes ultrasonores sont émises pendant le mouvement d'approche et/ou pendant le pliage,
- une puissance des ondes ultrasonores émises,
- une température de la tige composite (11), au nombre d'au moins une, sur la partie mise en forme (37) ou au point de pliage (21),
- une force de pression entre la sonotrode (24) et la tige composite (11), au nombre d'au moins une,
- une position du mouvement d'approche,
- une position de pliage ou une position angulaire des parties de tige, dans le voisinage du point de pliage.

9. Procédé de pliage selon l'une des revendications 1 à 5, **caractérisé en ce que** pendant le mouvement d'approche pour la réalisation de la partie mise en forme (37) et/ou pendant le pliage, la sonotrode (24) n'émet pas d'ondes ultrasonores.

10. Procédé de pliage selon l'une des revendications précédentes, **caractérisé en ce que** le mouvement d'approche pendant la réalisation de la partie mise en forme (37), au moins une des grandeurs réglées suivantes est réglée :
- une position relative entre la sonotrode (24) et la tige composite (11), au nombre d'au moins une,
- une vitesse du mouvement d'approche,
- une accélération du mouvement d'approche.

11. Procédé de pliage selon l'une des revendications précédentes, **caractérisé en ce que** le pliage s'effectue autour d'une surface de sonotrode (27) incurvée de la sonotrode (24), la surface de sonotrode (27) étant incurvée autour d'au moins un axe qui s'étend parallèlement à une troisième direction spatiale (z), la troisième direction spatiale (z) étant orientée à angle droit par rapport à la première direction spatiale (x) et la deuxième direction spatiale (y).

12. Procédé de pliage selon la revendication 11, **caractérisé en ce que** la surface de sonotrode (27) est incurvée en plus autour d'au moins un axe qui s'étend parallèlement à la première direction spatiale (x).

13. Procédé de pliage selon l'une des revendications précédentes, **caractérisé en ce que** la sonotrode (24) est à l'arrêt pendant le pliage.

14. Procédé de pliage selon l'une des revendications 1 à 12, **caractérisé en ce que** pendant le pliage, la sonotrode (24) se déplace dans la deuxième direction spatiale (y).

15. Procédé de pliage selon l'une des revendications précédentes, **caractérisé en ce que** pour le durcissement de la tige composite (11), au nombre d'au moins une, un fluide de refroidissement (C) est amené au point de pliage (21).

16. Procédé de pliage selon la revendication 15, **caractérisé en ce que** le fluide de refroidissement s'écoule à l'intérieur d'un élément qui est en contact avec la tige composite (11), au nombre d'au moins une, au point de pliage (21), et/ou **en ce que** le fluide de refroidissement (C) est amené directement en contact avec la tige composite (11).

17. Procédé de pliage selon l'une des revendications précédentes, **caractérisé en ce que** la matrice en matière plastique (M) de la tige composite (11), au nombre d'au moins une, présente une matière plastique (K) à réticulation transversale réversible.

18. Procédé de pliage selon l'une des revendications précédentes, **caractérisé en ce que** la matrice en matière plastique (M) de la tige composite (11), au nombre d'au moins une, présente une matière plastique (K) thermoplastique.

19. Dispositif de pliage (20) qui est conçu pour plier, en un point de pliage (21), une tige composite (11), au nombre d'au moins une, qui présente un faisceau de fibres de renfort (15) comportant plusieurs fibres de renfort (14) et noyé dans une matrice en matière plastique (M) durcie, les deux parties de tige (11a) de la tige composite (11), au nombre d'au moins une, qui sont adjacentes au point de pliage (21), s'étendant dans une première direction spatiale (x),
comprenant un dispositif à ultrasons (22) qui présente une sonotrode (24) et une source d'ultrasons (23), la sonotrode (24) pouvant être déplacée dans une deuxième direction spatiale (y), à angle droit par rapport à la première direction spatiale (x),
comprenant un dispositif d'appui (31) qui présente au moins un corps d'appui (32), chaque corps d'appui (32) présentant une surface d'appui (33) sur le côté opposé à la sonotrode (24), en vue de l'appui respectivement d'au moins une partie de la tige composite (11), au nombre d'au moins une,
le dispositif de pliage (20) étant conçu pour mettre en oeuvre le procédé de pliage avec les étapes suivantes :
- mise en place de la sonotrode (24) du dispositif à ultrasons (22) sur le point de pliage (21), les deux parties de tige (11a) de la tige composite (11), au nombre d'au moins une, qui sont adjacentes au point de pliage (21), s'étendant dans une première direction spatiale (x),
- chauffage de la matrice en matière plastique (M) de la tige composite (11), au nombre d'au moins une, au point de pliage (21), par couplage d'ondes ultrasonores dans la tige composite (11), au nombre d'au moins une, au point de pliage (21),
- formage de la tige composite (11), au nombre d'au moins une, pour réaliser une partie mise en forme (37) au point de pliage (21), par un mouvement d'approche entre la sonotrode (24) et la tige composite (11), au nombre d'au moins une, dans une deuxième direction spatiale (y) qui est orientée radialement par rapport au pliage devant être réalise au point de pliage (21), sachant que la réalisation de la partie mise en forme (37) a pour effet que la partie du faisceau de fibres de renfort est soumise à une traction le long du point de pliage et est amenée dans une position souhaitée, la surface d'appui (33) du corps d'appui (32), au nombre d'au moins un, étant conçue de manière telle que, après la réalisation de la partie mise en forme (37) et lors de l'opération de pliage au point de pliage (21), la tige composite (11), au nombre d'au moins une, soit appliquée contre la surface d'appui (33) le long de la totalité de la partie de la tige composite (11), au nombre d'au moins une, soutenue par la surface d'appui (33),
- pliage de la tige composite (11), au nombre d'au moins une, au point de pliage (21),
- durcissement de la matrice en matière plastique (M) au point de pliage (21).

20. Dispositif de pliage selon la revendication 19, **caractérisé en ce qu'**il est prévu au moins un outil de pliage (41, 42, 43) qui est conçu pour le pliage de la tige composite (11), au nombre d'au moins une, au point de pliage (21).
